# EUROPÄISCHE PATENTANMELDUNG

(11) **EP 3 339 221 A2**
(43) Veröffentlichungstag der Anmeldung: **27.06.2018**
(21) Anmeldenummer: 17209331.2
(22) Anmeldetag: 21.12.2017
(51) Int. Cl.: B65G 47/52, B65G 47/90, B65G 54/02

(54) **VORRICHTUNG UND VERFAHREN ZUM HANDHABEN VON PRODUKTEN**

(30) Priorität: 21.12.2016 DE 102016225888
(71) Anmelder: Weber Maschinenbau GmbH Breidenbach, 35236 Breidenbach (DE)
(72) Erfinder: ROTHER, Ingo, 35236 Breidenbach (DE); WEBER, Tobias, 35216 Biedenkopf-Wallau (DE)
(74) Vertreter: Grünecker Patent- und Rechtsanwälte PartG mbB

(57) **Zusammenfassung**

Die vorliegende Erfindung betrifft eine Vorrichtung zum Handhaben von Produkten 4, insbesondere Lebensmittelprodukten, umfassend einen Eingangsförderer 1, der ausgelegt ist, Produkte 4 in einer ersten Richtung X zu fördern, und eine Produktverlagerungseinrichtung 2, die Produkte 4 von dem Eingangsförderer 1 auf eine Produktablage 3 verlagert. Die Produktverlagerungseinrichtung 2 ist so ausgestaltet, dass damit die Produkte 4 jeweils ausschließlich in einer Verlagerungsebene E, E1, E2, E3, E4 verlagerbar sind, die durch eine zweite Richtung Y, die sich von der ersten Richtung X unterscheidet, und eine Vertikalrichtung Z aufgespannt wird. Die Erfindung betrifft weiterhin ein Verfahren zum Handhaben von Produkten 4, insbesondere Lebensmittelprodukten.

## Beschreibung

Die vorliegende Erfindung betrifft eine Vorrichtung zum Handhaben von Produkten, insbesondere Lebensmittelprodukten, die einen Eingangsförderer, der ausgelegt ist, Produkte in einer ersten Richtung zu fördern, und eine Produktverlagerungseinrichtung, die Produkte von dem Eingangsförderer auf eine Produktablage verlagert, umfasst. Die Erfindung betrifft weiterhin ein Verfahren zum Handhaben von Produkten.

Die DE 10 2009 037 833 A1 offenbart eine Vorrichtung und ein Verfahren zur Bildung von befüllten Mischkästen mit Flaschen unterschiedlicher Sorten, wobei in einer Mischpackervorrichtung ein Umsetzer vorgesehen ist, der Flaschen an verschiedenen Positionen einer Zuführungslinie ergreift und von einer ersten Förderlinie auf eine zweite Förderlinie umsetzt.

In der DE 20 2011 050 807 U1 wird eine Umpackvorrichtung unter Anderem für Lebensmittelbehälter offenbart, wobei Zuführförderer und Umsetzer Produkte in die gleiche Richtung fördern.

Der Stand der Technik erfordert somit oft komplex gestaltete Umsetzer, um eine flexible Anordnung von Produkten zu ermöglichen.

Es ist die Aufgabe der Erfindung eine Vorrichtung und ein Verfahren zum Handhaben von Produkten bereitzustellen, die eine flexible Verlagerung von Produkten mit ggf. variierendem Format ermöglichen, aber dennoch einfach, kostengünstig und betriebssicher gestaltet sind.

Dies wird erreicht durch eine Vorrichtung zum Handhaben von Produkten, insbesondere Lebensmittelprodukten, die einen Eingangsförderer, der ausgelegt ist, Produkte in einer erste Richtung zu fördern, und eine Produktverlagerungseinrichtung, die Produkte von dem Eingangsförderer auf eine Produktablage verlagert, umfasst, wobei die Produktverlagerungseinrichtung so ausgestaltet ist, dass sie die Produkte ausschließlich in einer Verlagerungsebene verlagern kann, die durch eine zweite Richtung, die sich von der ersten Richtung unterscheidet, und eine Vertikalrichtung aufgespannt wird. Im Gegensatz zu Vorrichtungen aus dem Stand der Technik, die die gleiche Flexibilität bezüglich der Anordnung der Produkte auf der Produktablage ermöglichen, kann erfindungsgemäß eine Produktverlagerungseinrichtung eingesetzt werden, die lediglich einen oder zwei Freiheitsgrade bezüglich der Verlagerungsbewegung bereitstellt. Insbesondere ist der Eingangsförderer ausgelegt, das wenigstens eine Produkt, das im Rahmen eines Produktverlagerungsvorgangs von der Produktverlagerungseinrichtung verlagert wird, in der vorgenannten Verlagerungsebene der Produktverlagerungseinrichtung anzuordnen. Die Erfindung ermöglicht insbesondere eine Kostensenkung bezüglich der Robotik der Produktverlagerungseinrichtung, sowie eine Leistungssteigerung. Zudem wird eine gute Zugänglichkeit ermöglicht, da ein schmaler Arbeits- und Schutzbereich um die Produktverlagerungseinrichtung ausreichend ist. Positiv wirkt sich die erfindungsgemäße Gestaltung auch auf die Gesamtlänge einer Lebensmittelverarbeitungslinie aus.

Insbesondere ist das Produkt eine Lebensmittelscheibe, die von einem Lebensmittellaib abgeschnitten wurde, eine Portion, z.B. eine Lebensmittelportion wie ein Stapel Lebensmittelscheiben, eine Teilportion, eine Packung, eine Zutat, o.Ä..

Insbesondere ist die erste Richtung orthogonal zur zweiten Richtung. Vorteilhafterweise sind die erste Richtung und/oder die zweite Richtung orthogonal zur Vertikalrichtung.

Vorteilhafterweise ist die Produktverlagerungseinrichtung ausgelegt, mehrere Produkte, die in einem vorbestimmten Abstand auf dem Eingangsförderer angeordnet sind, gleichzeitig zu erfassen. Die mehreren Produkte werden dann jeweils in parallelen Verlagerungsebenen, die durch die zweite Richtung und die Vertikalrichtung aufgespannt werden und voneinander in der ersten Richtung beabstandet sind, durch die Produktverlagerungseinrichtung vom Eingangsförderer auf die Produktablage verlagert.

Die Produktverlagerungseinrichtung weist vorteilhafterweise wenigstens einen Produktgreifer auf. Der Greifer ist dabei öffenbar und schließbar ausgestaltet, insbesondere durch Verfahren von Greiferschaufeln bezüglich einer Greiferbasis.

In einer weitergehenden Ausführungsform kann der Greifer verdrehbar ausgestaltet sein, sodass er zur Korrektur oder Ausrichtung der Produkte bei der Aufnahme und/oder Abgabe und/oder während einer Bewegung in der Produktverlagerungseinrichtung um eine Vertikalachse gedreht werden kann. Zusätzlich oder alternativ kann noch eine weitere, insbesondere horizontale Drehachse des Greifers vorgesehen sein, um den Greifer zu kippen und damit beispielsweise das Ablegen eines Produkts in einer anderen Orientierung zu ermöglichen. Durch Kippen des Greifers um 90° kann beispielsweise ein Produkt hochkant in eine Verpackung gestellt werden. Dies eignet sich insbesondere bei der Hochkant-Anordnung von Produkten in Form von Produktpackungen in einer Umverpackung.

Das Magnetfördersystem kann in verschiedenen Varianten ausgestaltet werden, wobei jeweils die Transportmover einzeln ansteuerbar und verfahrbar sind. So ist es möglich ein Bahnsystem mit nur einer Spur vorzusehen, auf dem die Transportmover sequenziell verfahrbar sind. Jeder Transportmover umfasst einen oder mehrere Produktträger, auf denen jeweils ein oder mehrere Produkte angeordnet werden können. Insbesondere können auf einem Transportmover mehrere zusammen greifbare Produkte angeordnet sein, wobei die relative Ausrichtung dieser Produkte entweder bereits beim Auflegen auf dem Produktträger gewährleistet wird, oder durch relatives Verfahren von mehreren Produktträgern des Transportmover.

In dem Magnetfördersystem können Transportmover vorgesehen sein, die zwei oder mehr Produktträger aufweisen. Insbesondere sind die mehreren Produktträger gegenüber einer gemeinsamen Basis in Vertikalrichtung verschieblich, um vor dem Ergreifen angehoben zu werden, sodass der Greifer nicht in Kontakt mit dem benachbarten Produkt auf dem Produktträger kommt, das gerade nicht ergriffen wird. Insbesondere können die Produktträger jeweils auf gegenüberliegenden Seiten bezüglich des Bahnsystems des Magnetfördersystems angeordnet sein, sodass ein Massenausgleich erreicht wird. Insbesondere kann der Transportmover bezüglich des Bahnsystems symmetrisch ausgestaltet sein.

Eine Beweglichkeit des Produktträgers gegenüber der Basis des Transportmovers ist auch für andere Funktionen im Magnetfördersystem vorteilhaft, und kann an einem Einlegepunkt, wie zum Beispiel einem Einlegeband, oder an einer Übergabestation, wie zum Beispiel einem Fallschacht oder Ähnlichem, vorgesehen werden.

In einer anderen Ausführungsform können mehrere Transportmover auf einer Spur des Bahnsystems so zueinander beabstandet angeordnet werden, dass die darauf angeordneten Produkte eine greifbare Reihe bzw. Zeile bilden.

Insbesondere weist die Produktverlagerungseinrichtung mehrere zumindest in der ersten Richtung beabstandete, einzeln fest miteinander verbundene Produktgreifer auf. Dadurch wird das Greifen von mehreren hintereinander in der ersten Richtung aufgereihten Produkten, insbesondere als Zeile oder Reihe, ermöglicht.

Vorteilhafterweise ist der Eingangsförderer ein Magnetfördersystem, das einzelne, individuell steuerbare Transportmover, die wenigstens einen Produktträger und insbesondere Permanentmagneten aufweisen, umfasst. Die Transportmover sind auf einem Bahnsystem, das insbesondere Linearmotoren umfasst, bewegbar. Der Bereich des Bahnsystems, ausgehend von dem die Produktverlagerungseinrichtung die Produkte verlagert, erstreckt sich in die erste Richtung. Somit kann durch gezieltes Anhalten bzw. gezieltes Heranfahren der Transportmover wenigstens ein Produkt, das auf einem Produktträger angeordnet ist, in der vorgenannten Verlagerungsebene angeordnet werden, sodass es von der Produktverlagerungseinrichtung verlagert werden kann. Das Magnetfördersystem ermöglicht einen individuellen Produkttransport durch individuelle Steuerung der Transportmover. Somit kann auch der Abstand von mehreren Transportmovern auf dem Bahnsystem so zueinander gesteuert werden, dass der Abstand der Produkte in der ersten Richtung so ist, dass mehrere Produkte, die gleichzeitig von der Produktverlagerungseinrichtung verlagert werden sollen, jeweils in der für sie bestimmten Verlagerungsebene angeordnet werden können. Der Magnetförderer ermöglicht damit den Abstand der Produkte in der ersten Richtung an den Abstand von einzelnen, festverbundenen Produktgreifern der Produktverlagerungseinrichtung anzupassen.

Es ist auch möglich, dass die Produktverlagerungseinrichtung mehrere fest miteinander verbundene Produktgreifer aufweist, die in der zweiten Richtung voneinander beabstandet sind, sodass mehrere Produkte von insbesondere parallelen Spuren des Eingangsförderers gleichzeitig aufgenommen werden können. Generell können mehrere voneinander in der ersten und/oder zweiten Richtung beabstandete Produktgreifer fest miteinander verbunden sein und gemeinsam durch die Produktverlagerungseinrichtung bewegt werden.

In einer Ausführungsform weisen die Transportmover eine Basis auf, die auf dem Bahnsystem verfahrbar angeordnet ist, und wenigstens einen Produktträger, der bezüglich der Basis verfahrbar ist, sodass das wenigstens eine Produkt auf dem Produktträger durch Verfahren des Produktträgers bezüglich der Basis so angeordnet werden kann, dass es von der Produktverlagerungseinrichtung erfasst und/oder verlagert werden kann. In einer Ausführungsform kann der Produktträger bezüglich der Basis in Vertikalrichtung anhebbar sein. Dies kann entweder durch einen Antrieb im Transportmover oder durch eine externe Vorrichtung, beispielsweise das Auffahren des Produktträgers auf eine Rampe bei der Bewegung des Transportmovers in der ersten Richtung erfolgen.

Zusätzlich oder alternativ kann der Produktträger gegenüber der Basis in der ersten Richtung und/oder der zweiten Richtung verfahrbar sein, sodass das Produkt in geeigneter Art und Weise in einer bestimmten Position angeordnet werden kann, in der es von der Produktverlagerungseinrichtung optimal erfasst werden kann.

Insbesondere ist der Produktträger ein Förderband, das bezüglich der Basis verfahren werden kann. Dabei kann die Verfahrrichtung des Förderbands in vorteilhafter Weise orthogonal zur Verfahrrichtung der Basis auf dem Bahnsystem sein, sodass eine Ausrichtung der Produkte in der ersten Richtung durch das Bahnsystem erfolgt und eine Ausrichtung der Produkte in der zweiten Richtung durch das Förderband.

In einer Ausführungsform ist der Produktträger eine elastisch bezüglich der Basis gelagerte Auflagefläche wobei durch Aufbringen einer Kraft die relative Position des Produktträgers zur Basis verändert werden kann. Damit kann eine Ausrichtung der Produkte insbesondere in der zweiten Richtung, aber auch eine Feineinstellung in der ersten Richtung, erfolgen, damit die Produkte einfach ergriffen werden können. Vorteilhaft ist, dass die einzelnen Transportmover keine aktiven Komponenten wie Motoren usw. benötigen, sondern dass eine relativ einfache Anordnung ausreichend ist, um die zusätzlichen Ausrichtarbeiten zu ermöglichen. Die Antriebe oder anderen Mittel zum Aufbringen der Antriebskraft für die Bewegung der Transportmover können insbesondere nur lokal angeordnet sein. Das Bahnsystem kann durch Führungsschienen und Linearmotoren gebildet werden, die jeweils mit temporär zugeordneten Transportmovern zusammenwirken.

In einer vorteilhaften Ausführungsform umfassen die Transportmover eine Basis und wenigstens zwei Produktträger, wobei die Produktträger zueinander verfahrbar sind, sodass sie in einem gewünschten Abstand angeordnet werden können, damit die Produktverlagerungseinrichtung die Produkte der wenigstens zwei Produktträger gleichzeitig verlagern kann. Insbesondere sind die Produktträger in der zweiten Richtung relativ zueinander verfahrbar. Die vorgenannte Ausgestaltung ermöglicht, dass die Produkte relativ zueinander in einem gewünschten Abstand angeordnet werden können, sodass sie in vorteilhafter Art von der Produktverlagerungseinrichtung ergriffen werden können. Wenn die Produkte insbesondere in einer Übergabestation auf dem Produktträger angeordnet werden, können die Produktträger in einem anderen Abstand zueinander angeordnet sein als wenn die Produkte von der Produktverlagerungseinrichtung weiter verlagert werden. Somit kann der Transportmover jeweils einen Ausgleich der Produktabstände zwischen der Übergabestation und der Produktverlagerungseinrichtung ermöglichen. Zusätzlich oder alternativ kann der Abstand der Produkte auch in der ersten Richtung angepasst werden.

In einer Ausführungsform weisen die Produktträger zueinander passende, insbesondere vorspringende und zurückgesetzte, Randkonturen auf, die ausgelegt sind, ineinander einzugreifen, wenn die Produktträger eines oder mehrerer Transportmover aneinander angrenzend angeordnet werden, um Abstände zwischen den jeweiligen Produkten zu verringern. Insbesondere ist die Randkontur an den Innenseiten in Förderrichtung, also in der ersten Richtung, entsprechend gestaltet. Dies ermöglicht, dass die Produktträger, insbesondere bei relativ kleinen Produktabmessungen, in geringem Abstand zueinander fahren können. Damit kann erreicht werden, dass der Produktabstand den Anforderungen der Verlagerungseinrichtung bzw. dem Abstand von nachgeordneten Verpackungsmulden entspricht. Dennoch steht eine genügend große Auflagefläche für das wenigstens eine Produkt bereit, da das wenigstens eine Produkt, wenn es größer ist, auch im Bereich der Randkontur aufliegen kann. Die Randkontur ist vorteilhafterweise als Verzahnung ausgestaltet oder umfasst rund oder rechteckig vorspringende Bereiche der Auflagefläche.

Die Produktträger haben vorteilhafterweise zueinander passende Randkonturen an den in Bewegungsrichtung stromaufwärtigen und stromabwärtigen Seiten. Jeweilige Konturen an der Vorderseite passen in die Konturen an der Rückseite. Somit sind an jedem Produktträger zwei unterschiedliche Randkonturen vorgesehen, was ermöglicht, dass alle Produktträger einheitlich gestaltet werden können. Die Randkonturen ermöglichen es, zwei benachbarte Produktträger, insbesondere bei relativ kleinen Produktabmessungen, dicht ineinander zu fahren, damit der Produktabstand den Abständen der Verpackungsmulden entspricht. Trotzdem steht genügend Auflagefläche auf den Produktträgern beim Transport von Produkten mit relativ großen Abmessungen zur Verfügung. Bei Produkten mit relativ großen Abmessungen ist ein Ineinanderfahren der Randkonturen nicht notwendig, weil entsprechend große Verpackungsmulden verwendet werden.

Vorstellbar sind einfache Randkonturen, welche einerseits leicht zu reinigen sind und andererseits genügend Auflagefläche für das Produkt bereitstellen.

In einer Ausführungsform ist der Eingangsförderer ein Band-, Ketten- oder Rollenförderer, auf dem insbesondere einzelne Produktträger laufen. Vorteilhafterweise ist es möglich, einen oder mehrere Produktträger im Bereich der Produktverlagerungseinrichtung so anzuordnen, so dass die jeweiligen Produkte in der vorgenannten Verlagerungsebene angeordnet sind, und somit von der Produktverlagerungseinrichtung verlagert werden können. Alternativ ist es auch möglich, dass die Produkte direkt auf dem Eingangsförderer, beispielsweise einem Bandförderer oder Riemenförderer laufen, bzw. dort aufliegen.

In einer Ausführungsform ist der Eingangsförderer oder der Produktträger wenigstens bereichsweise in Vertikalrichtung anhebbar, sodass die Relativbewegung in Vertikalrichtung zwischen einem Greifer der Produktverlagerungseinrichtung und dem Eingangsförderer bzw. Produktträger beim Ergreifen der Produkte durch eine Bewegung des Eingangsförderers bzw. Produktträgers realisiert werden kann. Dann ist es nicht notwendig, dass der Greifer der Produktverlagerungseinrichtung in Vertikalrichtung anhebbar ist, da die entsprechende Bewegung durch den Eingangsförderer bzw. Produktträger realisiert werden kann. Der Produktträger, sofern vorgesehen, kann als Teil des Eingangsförderers angesehen werden. Dabei ist es möglich, den Eingangsförderer gegebenenfalls gemeinsam mit dem Produktträger wenigstens bereichsweise anzuheben. In anderen Ausführungsformen kann nur der Produktträger bezüglich des verbleibenden Eingangsförderers angehoben werden.

Die vorgenannten Ausgestaltungen ermöglichen es, dass eine Produktverlagerungseinrichtung vorgesehen werden kann, deren Greifer nur in der zweiten Richtung verfahrbar ist. Insbesondere verfährt der Greifer nur horizontal an einer Führung zwischen dem Eingangsförderer und der Produktablage. Der Abgabepunkt des Produktes liegt vorteilhafterweise direkt über einer Verpackungsmulde. Eine Ablage der Produkte auf der Produktablage oder in der Verpackungsmulde kann durch Öffnen des Greifers und Produktabwurf aus geringer Höhe erfolgen. Dies wird durch eine Schaufelbewegung der Greiferschaufeln realisiert, die insbesondere ebenfalls in der zweiten, horizontalen Richtung stattfindet. Alternativ ist es möglich, die Schaufelbewegung in einer anderen Richtung vorzusehen. Vorteilhaft ist dabei der sehr einfache Aufbau der Produktverlagerungseinrichtung, deren wenige Bauteile eine gute Erreichbarkeit ermöglichen und deren geringe Maße eine hohe Beschleunigung und damit hohen Produktdurchsatz ermöglichen.

Die Bewegung in der ersten Richtung wird mit dem Eingangsförderer realisiert. Die Bewegung der Produkte in der Vertikalrichtung erfolgt vorteilhafterweise über eine gesteuerte Hubeinrichtung oder eine Rampe, auf die ein Produktträger eines Transportmovers oder ein Produktträger in einem Förderband aufläuft. Der Produktträger verschiebt sich insbesondere in einem Halterahmen, der durch die Basis eines Transportmovers ausgebildet wird.

Die Höhenlage der Produktverlagerungseinrichtung ist entsprechend auf die Anhebehöhe des Produktträgers und die Produktabwurfhöhe über zumindest einer Verpackungsmulde abgestimmt. Durch unterschiedlich weites horizontales Verfahren des Greifers in der zweiten Richtung können mehrere Verpackungsmulden zeilenweise gefüllt werden.

Vorteilhafterweise weist der Eingangsförderer im Bereich der Produktverlagerungseinrichtung mehrere einzeln ansteuerbare Spuren auf, von denen ausgehend die Produktverlagerungseinrichtung die Produkte bewegen, insbesondere verlagern, kann. Insbesondere erstrecken sich die Spuren im Bereich der Produktverlagerungseinrichtung parallel und in der ersten Richtung. Somit können mehrere Produkte zueinander in der ersten Richtung ausgerichtet werden, sodass sie gemeinsam von der Produktverlagerungseinrichtung ergriffen werden können. Insbesondere werden die Produkte auf gleiche Höhe in der ersten Richtung gebracht, sodass sie gemeinsam in der vorgenannten Verlagerungsebene liegen.

Vorteilhafterweise sind mehrere parallele Spuren vorgesehen, auf denen Transportmover eines Magnetfördersystems jeweils ausgerichtet zu Verlagerungsebenen anhalten. Bei verschiedenen Produkten auf den Transportmovern kann durch sequenzielles Ergreifen von verschiedenen Produkten Kombinationsprodukte erzeugt werden. Dies erfordert aber jeweils mehrere Verlagerungsvorgänge für die Erstellung eines Kombinationsproduktes.

Alternativ kann ein Eingangsförderer mit nur einer Spur vorgesehen sein, beispielsweise ein Bandgurt, von dem jeweils die Produkte einzeln durch die Produktverlagerungseinrichtung verlagert werden.

Insbesondere kann ein breiter Bandgurt eingesetzt werden, sodass ein Formatsatz bzw. eine Reihe von Produkten in der zweiten Richtung auf nur einem Bandgurt angeordnet ist. Alternativ können mehrere parallele Bandgurtspuren vorgesehen werden, sodass sich der Formatsatz bzw. die Reihe von Produkten in der zweiten Richtung durch eine Kombination der Produkte von den verschiedenen Bandgurten ergibt. Dabei wird eine hohe Flexibilität erreicht, da die parallelen Bandgurt-Spuren einzeln bewegt werden können, und so die Produkte jeweils besser zueinander und zu ihrer jeweiligen Verlagerungsebene ausgerichtet werden können.

Vorteilhafterweise umfasst die Vorrichtung ein Detektionsmittel, insbesondere eine Kamera, um die Position der Produkte auf dem Eingangsförderer zu bestimmen, wobei der Eingangsförderer, und insbesondere dessen Transportmover, auf Basis der von dem Detektionsmittels erfassten Information so ansteuerbar ist, dass eine Ausrichtung zwischen wenigstens einem Produkt und der Verlagerungsebene der Produktverlagerungseinrichtung möglich ist. Insbesondere ist das Detektionsmittel im Bereich der Produktverlagerungseinrichtung, vorteilhafterweise stromaufwärts der Produktverlagerungseinrichtung angeordnet. Insbesondere erfasst das Detektionsmittel die Lage des Produkts stromaufwärts oder in der Verlagerungsebene. Das Detektionsmittel kann auch eine Lichtschranke umfassen, mit der festgestellt werden kann, wann das Produkt in der Verlagerungsebene angeordnet ist.

Die Produktverlagerungseinrichtung umfasst insbesondere wenigstens einen 2D-Roboter. Ein 2D-Roboter ist ein Roboter, der Produkte nur innerhalb von zwei Dimensionen (2D), d.h. nur innerhalb von zwei Freiheitsgraden, verlagern kann. Erfindungsgemäß kann der 2D-Roboter die Produkte nur in der zweiten Richtung und der Vertikalrichtung verlagern.

In einer Ausführungsform umfasst die Produktverlagerungseinrichtung wenigstens einen 2D-Roboter in Form eines 2D-Pickers. Ein 2D-Picker ist ein Pick-and-Place Roboter, der Produkte innerhalb von zwei Freiheitsgraden verlagern kann, im vorliegenden Fall entlang der zweiten Richtung und der Vertikalrichtung. Der Vorteil von 2D-Pickern ist, dass sie wenig bewegte Masse und wenig bewegte Teile aufweisen und damit einen schnellen und präzisen Umsetzvorgang ermöglichen.

2D-Picker können Platz sparend nebeneinander angeordnet werden. 2D-Picker ermöglichen einen freien Einlegebereich bei der Produktablage. Im Gegensatz zu einem 3D-Picker ist es möglich mehrere 2D-Picker parallel anzuordnen, was keine höheren Platzanforderungen hat, aber den Durchsatz erheblich erhöhen kann. Greifen und Ablegen finden dann relativ dicht in mehreren parallelen Ebenen statt.

Insbesondere weisen 2D-Picker zwei verdrehbar angeordnete obere Arme auf, die geregelt gegenüber einer Basis verdreht werden können. Im Bereich des jeweils äußeren Endes der oberen Arme sind zwei untere Arme jeweils über ein Lager drehbar angebracht, die bis zu einer Greiferbasis führen. Damit die Greiferbasis ohne Verdrehung bewegt wird, ist an einem der Arme eine Ausgleichskonstruktion vorgesehen, die über einen Arm an der Greiferbasis und über ein Hebelelement im Bereich des Lagers zwischen dem oberen und unteren Arm befestigt ist. Der Hebel im oberen Arm ist über eine weitere Ausgleichsstange mit der Roboterbasis verbunden. Mehrere parallel angeordnete Produkte können von einem oder mehreren Greifern an der Greiferbasis erfasst werden.

Es kann ein Querbalken vorgesehen sein, der zwei 2D-Roboter verbindet, die sich, entweder durch mechanische Synchronisierung oder durch synchrone Ansteuerung, synchron bewegen. An dem Querbalken sind mehrere Greifer vorgesehen, die jeweils Produkte in einer eigenen Verlagerungsebene verlagern, die alle zueinander parallel sind. Somit begrenzen die 2D-Roboter nach außen hin den Arbeitsbereich.

In einer anderen Ausführungsform weist die Produktverlagerungseinrichtung wenigstens einen 2D-Portalroboter auf. Ein 2D-Portalroboter ist insbesondere ein Linienportalroboter, der eine sich in der zweiten Richtung erstreckende Schiene aufweist, an der ein gesteuert verfahrbarer Schlitten vorgesehen ist. Die Schiene kann vorteilhafterweise in Vertikalrichtung verfahren werden.

Bei den 2D-Portalrobotern handelt es sich insbesondere um Zweiachs-Portale mit Linearantrieben. Dabei kann der Linearantrieb insbesondere als gekapselter Zahnriemenantrieb, über Spindeln und Führungen, über Magnettechnik oder Pneumatik realisiert werden, um Hygieneanforderungen bezüglich guter Reinigbarkeit zu erfüllen.

In einer Ausführungsform sind mehrere 2D-Roboter in der ersten Richtung aufeinanderfolgend und parallel vorgesehen. Folglich werden mehrere 2D-Roboter kombiniert, die jeweils in mehreren parallelen Verlagerungsebenen Produkte verlagern, wobei diese Verlagerungsebenen in der ersten Richtung versetzt sind. Die 2D-Roboter können synchron oder individuell bewegt werden. Dadurch wird eine erhöhte Leistung erreicht. Dies ermöglicht es, dass in hoher Effizienz und in parallelen Verlagerungsebenen einzelne Produkte von dem Eingangsförderer auf die Produktablage verlagert werden können.

Die Ausgestaltung der Verlagerungseinrichtung mit einem 2D-Portalroboter ist relativ einfach integrierbar in das Fördersystem und kombinierbar mit mehreren weiteren insbesondere parallel angeordneten 2D-Portalrobotern in Modulbauweise. Zudem sind 2D-Portalroboter Platz sparend, was einen kompakten Aufbau ermöglicht. Sollte eine Umgestaltung der Vorrichtung notwendig werden können die Portalroboter einfach in der ersten Richtung verschoben werden und an geeigneter Stelle angeordnet werden. Beispielsweise erfolgt derart auch ein Einstellen der Roboter-Arbeitsebenen bzw. Verlagerungsebenen auf den Abstand von aufeinanderfolgenden Verpackungsmulden.

Alternativ oder zusätzlich können auch mehrere 2D-Roboter aufeinanderfolgend in der zweiten Richtung in einer Verlagerungsebene angeordnet sein, wobei ein erster 2D-Roboter Produkte vom Eingangsförderer kombiniert, insbesondere auf einer Zwischenablage, und ein zweiter 2D-Roboter das Kombinationsprodukt erfasst und auf der Produktablage insbesondere in einer Verpackung ablegt.

Vorteilhafterweise ist die Produktablage Teil einer Verpackungsmaschine, wobei die Produktablage so eingerichtet ist, dass die Produkte insbesondere direkt in eine Verpackung abgelegt werden können. Insbesondere werden die Produkte direkt in Verpackungsmulden einer Tiefziehverpackungs- bzw. Versiegelungsmaschine abgelegt. In den Verpackungsmulden sind Verpackungsunterteile vorgesehen, die durch eine Deckfolie versiegelt werden können.

Die Verpackungsmaschine kann Trays oder Schalen bereitstellen, die mit Lebensmittelprodukten in Form von Portionen oder Teilportionen wie Fleischscheiben oder verschiedene Sorten Käse oder Aufschnitt befüllt werden können. Insbesondere können Verpackungsmulden in Form von Folien-Unterschalen einer Tiefziehverpackungsmaschine befüllt werden. In anderen Ausführungsformen kann die Produktablage durch ein Einlegeband gebildet werden, auf dem Produkte in gezieltem Abstand angeordnet werden, sodass die Produkte direkt in Verpackungen eingelegt werden können. Dabei kann beispielsweise auch ein Kombinieren von Teilprodukten oder Teilportionen erfolgen. Schließlich ist es auch möglich, dass die Produkte auf Komplettierungsstrecken aufgelegt werden, um eine Mischpackungserstellung oder Sandwichlinie zu implementieren.

Die Produktablage kann insbesondere mehrere parallel angeordnete Ablagebereiche aufweisen, wobei die Produktverlagerungseinrichtung eingerichtet ist, in diese Ablagebereiche sequenziell und/oder gleichzeitig Produkte abzulegen. Somit kann eine vorbestimmte Anordnung der Produkte in der ersten Richtung und zweiten Richtung auf der Produktablage, beispielsweise in Einklang mit Verpackungsmulden, vorgesehen werden. Die Ausrichtung in der ersten Richtung wird durch den Eingangsförderer ermöglicht, und die Ausrichtung in der zweiten Richtung durch die Produktverlagerungseinrichtung.

Die Erfindung stellt weiterhin ein Verfahren zum Handhaben von Produkten, insbesondere Lebensmittelprodukten bereit, bei dem zunächst wenigstens ein Produkt auf einem Eingangsförderer in einer ersten Richtung bewegt wird, dann oder dabei das wenigstens eine Produkt durch Bewegen in der ersten Richtung auf dem Eingangsförderer bezüglich einer Produktionsverlagerungseinrichtung ausgerichtet wird, dann das Produkt ergriffen und in einer zweiten Richtung, die sich von der ersten Richtung unterscheidet, verlagert wird, und schließlich das Produkt auf einer Produktablage abgelegt wird.

Insbesondere ist die erste Richtung orthogonal zur zweiten Richtung. Somit kann das Produkt in einer in der ersten und zweiten Richtung bestimmten Position auf der Produktablage abgelegt werden, wobei jeweils nur ein Eingangsförderer mit einem Freiheitsgrad, nämlich in der ersten Richtung, und eine Produktverlagerungseinrichtung mit ebenfalls nur einem Freiheitsgrad, nämlich in der zweiten Richtung, vorgesehen werden muss.

In einer vorteilhaften Ausführungsform, wird die Lage der Produkte auf dem Eingangsförderer erkannt, und bei der Ausrichtung der Produkte bezüglich der Produktverlagerungseinrichtung berücksichtigt. Insbesondere erfolgt die Erkennung sensorisch, beispielsweise durch eine Kamera und Bildverarbeitungssoftware.

Vorteilhafterweise ist der Eingangsförderer als Magnetfördersystem ausgestaltet, das einzelne Transportmover umfasst, wobei auf zumindest einem Transportmover wenigstens ein Produkt angeordnet ist. Insbesondere kann in einer Ausführungsform auf dem Transportmover nur ein Produkt vorgesehen sein. In anderen Ausführungsformen können auch mehrere Produkte auf dem Transportmover angeordnet sein. Das Magnetfördersystem ermöglicht eine genaue Positionierung des Transportmovers, sodass die Ausrichtung des wenigstens einen Produktes bezüglich der Produktverlagerungseinrichtung vorteilhaft geschehen kann. Zudem ermöglicht das Magnetfördersystem eine flexible Handhabung und den flexiblen Transport von Produkten zwischen einzelnen Produktionsstationen, beispielsweise das Fördern von Lebensmittelprodukten ausgehend von Aufschneidemaschinen, über Zwischenverarbeitungssysteme bis hin zu der Produktverlagerungseinrichtung, die die Produkte insbesondere einer Verpackungsmaschine zuführt.

Vorteilhafterweise werden mehrere Transportmover so auf dem Eingangsförderer angeordnet, dass die relative Anordnung der Produkte auf den mehreren Transportmovern dem Formatsatz einer Produktverlagerungseinrichtung entspricht, sodass die Produkte gemeinsam verlagert werden können. Der Formatsatz der Produktverlagerungseinrichtung kann dabei durch mehrere insbesondere in festen Abständen voneinander angeordnete Greifer definiert werden, die die Produkte insbesondere synchron auf dem Eingangsförderer ergreifen können.

Insbesondere sind im Magnetfördersystem parallele Spuren vorgesehen, auf denen jeweils abwechselnd mehrere Transportmover mit Produkten angeordnet werden, wobei die Produkte der einzelnen Spuren jeweils abwechselnd gemeinsam von der Produktverlagerungseinrichtung verlagert werden. Dies ermöglicht, dass auf einer Spur eine Aufreihung und Ausrichtung der Produkte erfolgt, während zeitgleich von der anderen Spur Produkte von der Produktverlagerungseinrichtung ergriffen werden. Damit kann die Produktivität und der Durchsatz des Verfahrens weiter gesteigert werden.

Vorteilhafterweise sind eine oder mehrere Zwischenproduktablagen vorgesehen, auf denen die Produkte zwischenabgelegt werden, wodurch mehrere Produkte zu einem Kombinationsprodukt kombiniert werden können. Insbesondere wird dafür ein Produkt von dem Eingangsförderer ergriffen und auf einer ersten Produktablage abgelegt, wobei zeitgleich oder nachfolgend ein zweites Produkt auf dem Eingangsförderer bezüglich der Produktverlagerungseinrichtung ausgerichtet wird. Dazwischen wird das zweite Produkt von der Produktverlagerungseinrichtung ergriffen und auf dem ersten Produkt abgelegt. Entsprechend können weitere Produkte auf dem ersten und zweiten Produkt auf der ersten Produktablage abgelegt werden, oder die auf der ersten Zwischenproduktablage vorhandenen Produkte können auf eine weitere Zwischenproduktablage verlagert werden, auf der bereits ein oder mehrere andere Produkte vorliegen. Schließlich wird das Kombinationsprodukt aus mehreren Produkten von der Produktverlagerungseinrichtung ergriffen und weiter gefördert, insbesondere zu einer Verpackungsmaschine, und darin insbesondere einer Verpackungsmulde zugeführt. Bei einem Kombinationsprodukt handelt es sich um ein Produkt, das durch Kombination von mehreren (Teil)produkten erhalten wird. Wenn (Teil)produkte jeweils aus unterschiedlichen Produktsorten bestehen, ist das Kombinationsprodukt ein Mehrsortenprodukt. Es können beispielsweise Portionen, d.h. Stapel oder Scheiben, von verschiedenen Käsesorten, Wurstsorten, Schinkensorten, usw. miteinander oder untereinander kombiniert werden, um ein Mehrsortenprodukt in Form einer Mehrsortenportion zu bilden.

In einer Ausführungsform wird das erste Produkt nach dem Ergreifen in dem Greifer vorgehalten und auf ein zweites Produkt auf dem Eingangsförderer abgelegt, sodass ein Produkt in Form eines Kombinationsprodukts entsteht, das wiederum ergriffen und in der zweiten Richtung, die sich von der ersten Richtung unterscheidet, verlagert und auf der Produktablage abgelegt wird. Somit können Kombinationsprodukte ohne Zwischenablegen erzeugt werden. Insbesondere wird das zweite Produkt auf dem Eingangsförderer bezüglich der ergriffenen Produktverlagerungseinrichtung ausgerichtet.

Eine Ausgestaltung des Verfahrens zum Erstellen von Kombinationsprodukten wird im Folgenden detaillierter beschrieben. Zunächst wird ein Produktträger in der ersten Richtung mit einem Greifer ausgerichtet. Dann wird der Produktträger angehoben und das erste Produkt ergriffen. Daraufhin wird der Produktträger heruntergefahren und der leere Produktträger in der ersten Richtung weitergefahren. Dann wird ein neuer Produktträger mit einem zweiten Produkt mit dem Greifer ausgerichtet. Das erste Produkt wird im Greifer gehalten, bis das zweite Produkt darunter positioniert ist. Dann wird der Greifer geöffnet und das erste Produkt auf das zweite Produkt abgeworfen. Der Produktträger wird angehoben und das Kombinationsprodukt mit dem ersten und zweiten Produkt ergriffen. In einem weiteren Schritt kann das Kombinationsprodukt abgelegt werden, beispielsweise in einer Verpackungsmulde und/oder auf ein weiteres Produkt oder Kombinationsprodukt.

Alternativ oder ergänzend ist es auch möglich, Kombinationsprodukte dadurch zu erzeugen, dass die Verlagerungseinrichtung mehrere Produkte direkt vom Eingangsförderer sequenziell auf der Produktablage in Form einer Verpackungsmulde ablegt, sodass ein Kombinationsprodukt direkt in der Verpackungsmulde entsteht.

Die Erfindung stellt weiterhin eine Vorrichtung zum Handhaben von Produkten, insbesondere Lebensmittelprodukten, bereit, die einen Eingangsförderer umfasst, der ausgelegt ist, Produkte in einer ersten Richtung zu fördern, und einen über dem Eingangsförderer angeordenbaren Greifer, wobei der Greifer stationär ist, und wobei der Eingangsförderer ausgelegt ist, zumindest bereichsweise in einer Vertikalrichtung verfahren zu werden, sodass wenigstens ein auf dem Eingangsförderer angeordnetes Produkt vom Greifer ergriffen werden kann, wobei weiterhin eine Produktablage vorgesehen ist, die zumindest in einem stromaufwärtigen, aufnahmeseitigen Bereich unter den Greifer verfahren werden kann, damit ein im Greifer angeordnetes Produkt darauf abgelegt werden kann. Der stationäre Greifer ist insbesondere bis auf die Greiferschaufelbewegung unbeweglich.

Diese Ausgestaltung hat den Vorteil, dass noch weniger bewegliche Teile für die Verlagerung der Produkte vorgesehen werden müssen, da der Greifer lediglich geöffnet und geschlossen, nicht aber verfahren wird.

In der vorgenannten Ausführungsform ist der Greifer vorteilhafterweise fest an einem Gestell montiert. Während der Greifer stationär ist, ist lediglich eine Schaufelbewegung der Greiferschaufeln zum Öffnen und Schließen des Greifers vorgesehen. Das Öffnen und Schließen der Greiferschaufeln erfolgt insbesondere in horizontaler Richtung.

Die Bewegung in der Vertikalrichtung erfolgt über eine gesteuerte Hubeinrichtung für den Produktträger. Beispielsweise kann eine Rampe vorgesehen sein, auf die der Produktträger mit seiner Unterseite aufläuft und somit angehoben wird. Der Produktträger verschiebt sich insbesondere bezüglich der Basis des Transportmovers. Damit wird das Produkt in den Erfassungsbereich des Greifers angehoben. Der Greifer ergreift das Produkt, und daraufhin kann der Produktträger abgesenkt werden und der Transportmover bzw. der leere Produktträger werden weiter in der ersten Richtung gefahren.

Vorteilhafterweise ist die Produktablage ein Ablageförderer, der das wenigstens eine darauf durch den Greifer angeordnete Produkt weiter fördern kann, insbesondere zu einer Verpackungsmaschine.

In einer Ausführungsform ist die Produktablage ein Ablageförderer, der an seinem stromabwärtigen Ende in Förderrichtung verfahren werden kann und somit dazu ausgelegt ist, das Produkt in Verpackungsmulden in verschiedenen Positionen abzulegen. Insbesondere wird das stromabwärtige Ende des Ablageförderers in der gleichen Geschwindigkeit zurückgezogen, wie das Produkt auf dem Ablageförderer gefördert wird, sodass das Produkt absolut gesehen stationär bleibt und in die darunter angeordnete Verpackungsmulde fällt. Insbesondere können zeitgleich mehrere Produkte auf dem Ablageförderer angeordnet sein und sequenziell in verschiedenen Verpackungsmulden abgelegt werden. Dabei können die Produkte schon so auf dem Ablageförderer positioniert sein, dass sie während des gesamten Zurückziehens des Ablageförderers entgegen der Förderrichtung stationär über den Verpackungsmulden angeordnet sind.

Der Ablageförderer kann wenigstens ein längenvariables Rückzugsband aufweisen. Dieses kann mit seinem aufnahmeseitigen Ende bis in den Bereich unter den Greifer gefahren werden, sodass das Produkt direkt darauf von den Greifer abgeworfen werden kann. Dann wird das Produkt verfahren, sodass das nächste Produkt auf dem Rückzugsband angeordnet werden kann.

Die Produktablage kann einen Zwischenablageförderer umfassen, dessen stromabwärtiges Ende in Förderrichtung verfahren werden kann, um die Produkte in verschiedene Verpackungsmulden einer nachgeordneten Verpackungsmaschine abzulegen.

Die Produktablage kann insbesondere einen Zwischenablageförderer mit wenigstens einem längenvariablen Rückzugsband umfassen.

Der zumindest eine Zwischenablageförderer ermöglicht, die Produkte von dem Eingangsförderer zu einem Abgabepunkt über eine Produktablage, insbesondere einer Verpackungsmulde, zu transportieren. Die Ausrichtung der Produkte in der ersten Richtung wird mit dem Eingangsförderer realisiert. Der Zwischenablageförderer ist insbesondere als längenvariables Rückzugsband ausgebildet. Dieses kommt mit seinem stromabwärtigen Ende in den Bereich unter den Greifer hervor, sodass das Produkt aus dem Greifer auf dem Zwischenablageförderer abgeworfen oder abgesetzt werden kann. Insbesondere können mehrere Produkte nacheinander und nebeneinander auf dem Zwischenablageförderer angeordnet werden. Der Abstand zwischen Produkten kann insbesondere angepasst werden, wenn diese von einem ersten Zwischenablageförderer auf einen zweiten Zwischenablageförderer übergeben werden, die mit unterschiedlichen Geschwindigkeiten angetrieben werden. Zudem ermöglicht die Kombination von zwei Zwischenablageförderern, dass deren Verbindungsstelle in der zweiten Richtung verstellt werden kann. Dennoch kann jeder Zwischenablageförderer durch Längenausgleich seinen Takt erhalten. Folglich können ganze Produktzeilen auf der Produktablage in definierten Abständen in der zweiten Richtung abgelegt werden. Beispielsweise können die Produktzeilen in Verpackungsmulden eingelegt werden, wobei das Einlegeband sehr flach über den Verpackungsmulden geführt werden kann.

In einer Ausführungsform ist es möglich, dass die Abstände von mehreren Produkten beim Verlagern mit der Produktverlagerungseinrichtung verändert werden. Dafür können insbesondere mehrere Greifer in der Produktverlagerungseinrichtung relativ zueinander bewegt werden, beispielsweise zwei Greifer, die an einer gemeinsamen Greiferbasis vorgesehen sind. Somit können die Abstände zwischen Produkten verändert werden.

In manchen Ausführungsformen ist es möglich, die einzelnen Abstände zwischen den Produkten, die sich gleichzeitig im Greifer befinden, zu variieren. Die relative Veränderung der Lage der Produkte zueinander im Greifer wird insbesondere in Ergänzung zur Ausrichtung auf dem Eingangsförderer vorgesehen. So kann auf dem Eingangsförderer eine Ausrichtung mit einer geringeren Genauigkeit erfolgen und die für die Produktablage bzw. Verpackungsmaschine erforderliche hohe Genauigkeit, kann dann durch relatives Bewegen der Greifer zueinander erreicht werden. Zudem kann die relative Bewegung der Greifer zueinander ermöglichen, dass Abstände zwischen Produkten vorgesehen werden können, die kleiner sind, als dies auf dem Eingangsförderer möglich ist.

Somit kann beim Ergreifen von mehreren Produkten der Abstand der Produkte zueinander im Greifer verändert werden, nachdem die Produkte von der Verlagerungseinrichtung aufgenommen wurden. Beispielsweise kann ein Ergreifen mit einem größeren Produktabstand erfolgen, und dann können die Produkte im Greifer zueinander gefahren werden, um in einem engeren Formatsatz abgelegt zu werden. Dies ist insbesondere vorteilhaft, wenn eine Differenz zwischen dem Produktabstand auf dem Eingangsförderer und dem Produktabstand auf der Produktablage, insbesondere dem Abstand der Verpackungsmulden, besteht. Es findet somit in geringem Umfang eine Bewegung des Produkts bezüglich der Produktverlagerungseinrichtung, insbesondere bezüglich des Greifers, statt. Diese Bewegung kann als ein Nachjustieren der Position des Produkts angesehen werden. Um die Bewegung zu ermöglichen, kann ein Antrieb außerhalb der Verlagerungseinrichtung vorgesehen werden, beispielsweise eine Steuerkontur, an der der Greifer der Verlagerungseinrichtung vorbeifährt und dabei geringfügig ausgelenkt wird. Alternativ oder zusätzlich kann ein Antrieb im Greifer vorgesehen sein, der eine Verschiebung des wenigstens einen Produktes bezüglich des Greifers oder eine Verschiebung des Greifers insgesamt ermöglicht. Dieser Antrieb kann z.B. pneumatisch, elektrisch oder mechanisch ausgeführt sein.

In einer Ausführungsform ist es möglich, dass ein Ausrichten von Produkten im Greifer bzw. während des Verlagerungsvorgangs möglich ist. Dieses Ausrichten kann die vorgeschriebenen Parallelverschiebungen und/oder ein Verdrehen des Produktes umfassen. Dabei bewegen sich der Greifer oder Teile des Greifers nicht.

Die Erfindung wird nun anhand von vorteilhaften Ausführungsformen weitergehend erläutert.
Fig. 1 zeigt eine Draufsicht auf eine erste Ausführungsform einer erfindungsgemäßen Vorrichtung zum Handhaben von Produkten.
Fig. 2 zeigt eine Vorderansicht der Ausführungsform aus Fig. 1.
Fig. 3 zeigt eine Draufsicht auf eine zweite Ausführungsform der erfindungsgemäßen Vorrichtung.
Fig. 4 zeigt eine Vorderansicht der Ausführungsform gemäß Fig. 3.
Fig. 5 zeigt eine Draufsicht auf eine dritte Ausführungsform einer erfindungsgemäßen Vorrichtung.
Fig. 6 zeigt eine Draufsicht auf eine Ausgestaltung des Eingangsförderers bei einer möglichen Ausführungsform der Erfindung.
Fig. 7 zeigt eine Seitenansicht einer Ausgestaltung des Eingangsförderers bei einer möglichen Ausführungsform der Erfindung.
Fig. 8 zeigt eine Draufsicht auf den Eingangsförderer aus Fig. 7.
Fig. 9 zeigt den Eingangsförderer und Zwischenproduktablagen in einer Ausführungsform der Erfindung.
Fig. 10 zeigt einen Eingangsförderer und Zwischenproduktablagen in einer Ausführungsform der erfindungsgemäßen Vorrichtung.
Fig. 11 zeigt eine Draufsicht auf die Ausführungsform aus Fig. 10.
Fig. 12a zeigt eine perspektivische Ansicht einer Ausgestaltung einer Verlagerungseinrichtung in einer Ausführungsform der erfindungsgemäßen Vorrichtung.
Fig. 12b zeigt eine Draufsicht auf eine Ausführungsform einer erfindungsgemäßen Vorrichtung mit der Verlagerungseinrichtung aus Fig. 12a.
Fig. 13 zeigt eine Draufsicht auf eine weitere Ausführungsform der erfindungsgemäßen Vorrichtung.
Fig. 14 zeigt eine Draufsicht auf eine weitere Ausführungsform der erfindungsgemäßen Vorrichtung.
Fig. 15 zeigt eine Vorderansicht einer weiteren Ausführungsform der erfindungsgemäßen Vorrichtung.
Fig. 16 a) bis d) zeigen eine Abfolge von Verfahrensschritten bei einer weiteren Ausführungsform einer erfindungsgemäßen Vorrichtung.
Fig. 17 a) bis d) zeigen eine Abfolge von Verfahrensschritten bei einer weiteren Ausführungsform einer erfindungsgemäßen Vorrichtung.
Fig. 18 zeigt eine Ausführungsform einer weiteren erfindungsgemäßen Vorrichtung.

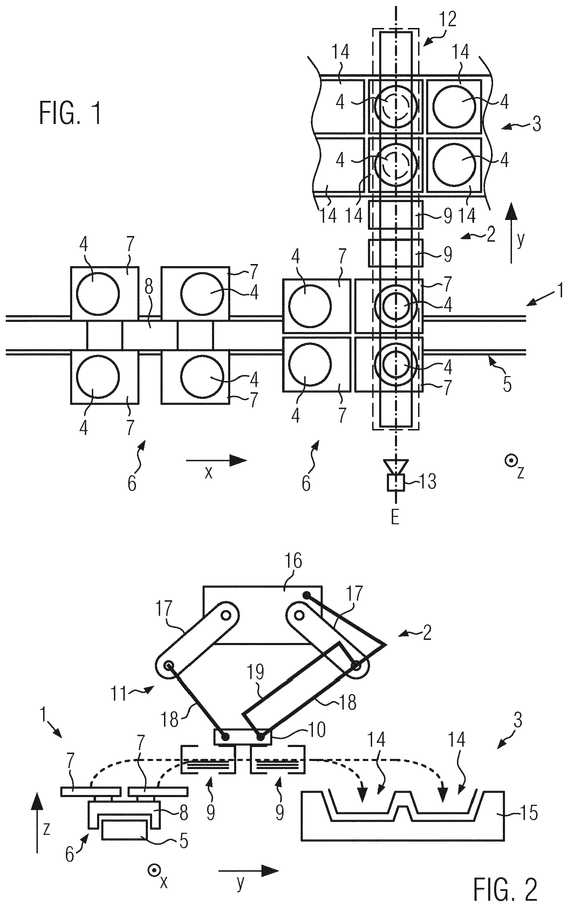

In Fig. 1 ist eine erste Ausführungsform einer erfindungsgemäßen Vorrichtung zum Handhaben von Lebensmittelprodukten in Draufsicht dargestellt. Die Vorrichtung umfasst einen Eingangsförderer 1, eine Produktverlagerungseinrichtung 2 und eine Produktablage 3, die die jeweiligen Produkte 4 in dieser Abfolge durchlaufen. Bei den Produkten 4 handelt es sich um Lebensmittelprodukte, insbesondere in Form von geschnittenen Portionen eines Lebensmittellaibes, beispielsweise um Stapel von Wurst-, Schinken- oder Käsescheiben. Die Produkte werden insbesondere durch eine Lebensmittelaufschneidemaschine, vorteilhafterweise einen Slicer, erzeugt und dem Eingangsförderer 1 zugeführt.

Der Eingangsförderer 1 ist ein Magnetfördersystem, dass ein Bahnsystem 5 umfasst, dass sich zumindest im Bereich der Produktverlagerungseinrichtung 2 in einer ersten Richtung X erstreckt. Auf dem Bahnsystem 5 sind mehrere einzelne, individuell steuerbare Transportmover 6 angeordnet, die Permanentmagneten aufweisen, sodass sie mittels im Bahnsystem angeordneten Linearmotoren gesteuert verfahren werden können. Der Eingangsförderer 1 ist somit als Linearförderer mit individueller Steuerung von Transportmovern 6 ausgeführt.

Durch das Magnetfördersystem und den dadurch ermöglichten individuellen Transport der Produkte 4 auf den Produktträgern 7 kann der Abstand der Produkte auf unterschiedlichen Transportmovern in der ersten Richtung X geregelt werden.

Die Transportmover 6 weisen weiterhin mehrere Produktträger 7 auf, die bezüglich einer Basis 8 verfahrbar angeordnet sind.

Wie an dem rechten Transportmover 6 in Fig. 1 gesehen werden kann, können die Produktträger 7 so aneinander gefahren werden, dass die Abstände zwischen den Produkten 4 verkleinert werden. Dies ermöglicht, dass die Produkte mit größerem Abstand auf die Transportmover 6 gelegt werden können, was das Auflegen vereinfacht. Zum späteren Ergreifen können die Produktträger 7 näher zueinander gefahren werden, sodass die Produkte 4 den für die Produktverlagerungseinrichtung 2, bzw. die Produktablage 3 vorgesehenen Produktabstand einnehmen.

Die Produktverlagerungseinrichtung 2 weist zwei Greifer 9 auf, die mittels der Produktverlagerungseinrichtung 2 gemeinsam in der ersten Richtung X und der Vertikalrichtung Z bewegt werden können. Die Greifer 9 weisen eine Greiferbasis 10 auf, an der Greiferschaufeln befestigt sind.

Die Produktverlagerungseinrichtung 2 weist einen 2D-Roboter 11 auf, an dem die Greifer 9 befestigt sind, sodass sie durch den 2D-Roboter 11 verfahren werden können. Der 2D-Roboter 11 ist so ausgestaltet, dass die Produktverlagerungseinrichtung 2 die Produkte 4 ausschließlich in einer Verlagerungsebene E verlagern kann, die durch die zweite Richtung Y und die Vertikalrichtung Z aufgespannt wird. Eine Bewegung des 2D-Roboters 11 in der ersten Richtung X ist nicht möglich. Damit kann gewährleistet werden, dass der Roboter sich nur innerhalb eines begrenzten Arbeitsbereichs 12 entlang der Verlagerungsebene E bewegen kann, der in ersten Richtung X nicht wesentlich über die Breite der Greifer 9 hinausgeht.

In Fig. 2 ist eine Schnittansicht durch die Verlagerungsebene E dargestellt, die die Ausgestaltung des 2D-Roboters 11 als 2D-Picker zeigt. Der Eingangsförderer 1 so geregelt, dass jeweils die Produktträger 7, von denen Produkte 4 ergriffen werden sollen, präzise in der Verlagerungsebene E angeordnet werden. Das Anordnen der Produkte 4 in der Verlagerungsebene E kann dabei durch Verfahren der Transportmover 6 und/oder Verfahren der Produktträger 7 bezüglich der Basis 8 der Transportmover 6 erfolgen.

Insbesondere ist eine Kamera 13 vorgesehen, vorzugsweise im Greif- und/oder Zuführungsbereich, die die Lage der einzelnen Produkte erkennt und ein genaues Ausrichten der Produkte 4 in der ersten und/oder zweiten Richtung ermöglicht. Die Kamera 13 erfasst mittels geeigneter Bildbearbeitungssoftware die Position der jeweiligen Produkte, die als Rückführungssignal für die Regelung der Anordnung der Produkte 4 in der Verlagerungsebene E dient.

Die in der Verlagerungsebene E angeordneten Produkte 4 werden dann durch die Greifer 9 der Produktverlagerungseinrichtung 2 ergriffen, in Vertikalrichtung Z angehoben, in der zweiten Richtung Y verfahren und über Verpackungsmulden 14 der Produktablage 3 angeordnet. Bei den Verpackungsmulden 14 handelt es sich insbesondere um Verpackungsunterteile, die in einer Verpackungsmaschine 15, beispielsweise einer Tiefziehverpackungsmaschine, angeordnet sind. Nach dem Einlegen der Produkte 4 in die Verpackungsmulden 14, werden die Verpackungsmulden 14 verfahren, insbesondere in die erste Richtung X, und können weiter stromabwärts versiegelt werden.

Wie in Fig. 2 dargestellt, weist der Roboter 11 eine Roboterbasis 16 auf, an der obere Arme 17 geregelt verdrehbar vorgesehen sind. Ausgehend vom distalen Ende der oberen Arme 17 erstrecken sich untere Arme 18 bis zur vorgenannten Greiferbasis 10. Die Bewegung der Greiferbasis 10 in zwei Freiheitsgraden - Vertikalrichtung Z und zweite Richtung Y - wird durch die jeweils individuelle Verdrehung der oberen Arme 17 durch geeignete Antriebe bewirkt. Um eine Verdrehung der Greiferbasis 10 zu verhindern, ist im Bereich eines der unteren Arme 18 eine Parallelstange 19 vorgesehen, die über einen Mechanismus sowohl mit der Greiferbasis 10 als auch mit der Roboterbasis 16 verbunden ist. Folglich kann gewährleistet werden, dass die Greiferbasis immer parallel zur Roboterbasis 16 angeordnet ist, d.h. dass die Greifer 9 immer horizontal ausgerichtet sind.

Die Vorrichtung gemäß der ersten Ausführungsform wird insbesondere wie folgt betrieben: Zunächst werden Produkte 4, insbesondere in Form von Lebensmittelportionen, in einer nicht dargestellten Übergabestation auf den Produktträger 7 der Transportmover 6 angeordnet, wobei die Produktträger 7 des jeweiligen Transportmovers 6 dabei in einem ersten Abstand angeordnet sind. Die Transportmover 6 werden dann auf dem Bahnsystem 5 des Magnetfördersystems verfahren und der Abstand der Produktträger 7 wird in Transportrichtung X auf einen zweiten Abstand verkleinert. Zusätzlich oder alternativ werden die Produktträger 7 orthogonal zur Transportrichtung X auf den benötigten Greiferabstand zueinander gefahren. Die Abstände der Produkte 4 entsprechen dann insbesondere den Abständen zwischen den Verpackungsmulden 14 in der zweiten Richtung Y. Wenn die Verlagerungseinrichtung 2 mehrere parallel in der ersten Richtung X angeordnete 2D-Roboter oder mehrere parallel in der ersten Richtung X am 2D-Roboter angeordnete Greifer 9 aufweist, können mehrere Produkte 4 zeitgleich erfasst werden. Ein Greifer kann auch mehrere Produkte eines Formatsatzes gleichzeitig erfassen, wenn gewährleistet wird, dass diese durch den Greifer nicht relativ zueinander bewegt werden.

Das Ablegen in den Verpackungsmulden 14 erfolgt insbesondere dadurch, dass der wenigstens eine Greifer 9 über der jeweilig zugeordneten Verpackungsmulde 14 angeordnet wird, und dann der wenigstens eine Greifer 9 geöffnet wird, sodass das wenigstens eine Produkt 4 aus geringem Abstand in die wenigstens eine Verpackungsmulde 14 fällt.

Die Möglichkeit der individuellen Linearbewegung durch das Magnetfördersystem bzw. durch die relative Bewegung der Produktträger 7 in den Transportmovern 6 ermöglicht es, das Produkt in der ersten Richtung X direkt unter einen Produktgreifer 9 der Produktverlagerungseinrichtung 2 anzuordnen. Dann kann die Produktverlagerungseinrichtung mit dem 2D-Roboter das wenigstens eine Produkt 4 aufnehmen und in der zweiten Richtung Y verlagern. Dabei ist das wenigstens eine Produkt 4 schon in der ersten Richtung X mit der wenigstens einen Verpackungsmulde 14 ausgerichtet und kann nach Ausrichtung in der zweiten Richtung Y durch die Verlagerungseinrichtung 2 vertikal in die Verpackungsmulde 14 abgegeben werden. Zusätzlich zu dieser Bewegung in der zweiten Richtung Y ist allenfalls eine Bewegung in Vertikalrichtung Z, d.h. ein Aufnahmehub und gegebenenfalls ein Abgabehub des Greifers 9 vorgesehen.

Insbesondere wird der Abstand zwischen den Produkten 4 auf dem Eingangsförderer 1 an die Abstände der Greifer 9 an einer Roboterbasis 10 oder an die Abstände von Greifern zwischen unterschiedlichen, parallelen 2D-Robotern angepasst. Dadurch wird das gemeinsame Ergreifen von mehreren in der ersten Richtung X hintereinander aufgereihten Produkten als Zeile bzw. Reihe ermöglicht. Dies ist insbesondere bei Vorrichtungen möglich, bei denen jeder Transportmover nur einen Produktträger aufweist. Wenn mehr als ein Produkt auf einem Transportmover transportiert werden soll, so ist es möglich, den Transportmover mit mehreren Produktträgern, insbesondere zwei oder vier Produktträgern, auszuführen. Die einzelnen Produktträger können dann quer zur ersten Richtung X, d.h. in der zweiten Richtung Y, in ihrem Abstand zueinander so verändert werden, dass ein Mehrfachgreifer mit mehreren Greifern in festem Abstand, beispielsweise ein Zweifach- oder Vierfachgreifer, alle Produkte gleichzeitig aufnehmen und mit einem Hub gleichzeitig auf einer Produktablage 3 ablegen kann, beispielsweise gleichzeitig in einer mehrschaligen Verpackung oder mehreren nebeneinander angeordneten Verpackungen.

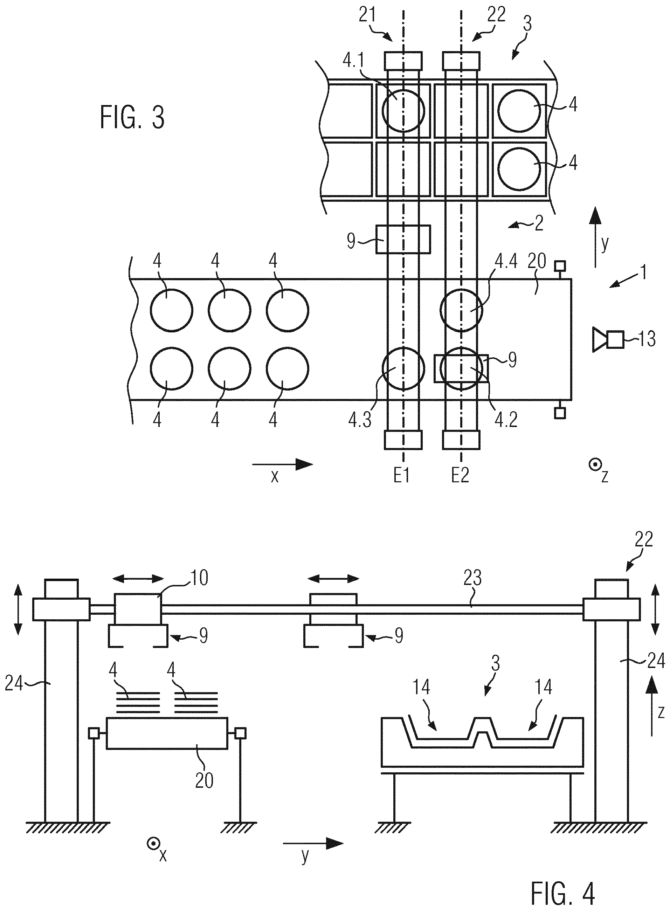

In Fig. 3 ist eine zweite Ausführungsform der erfindungsgemäßen Vorrichtung in Draufsicht dargestellt. In dieser Ausführungsform umfasst der Eingangsförderer 1 ein Förderband 20, auf dem die einzelnen Produkte 4 angeordnet sind. Die Produkte 4 werden gemeinsam von dem Förderband 20 in der ersten Richtung X bis zu einer Produktverlagerungseinrichtung 2 gefördert, die in diesem Ausführungsbeispiel zwei parallel angeordnete 2D-Portalroboter 21, 22 umfasst. Die 2D-Portalroboter 21, 22 umfassen jeweils einen Querbalken 23, der sich horizontal in der zweiten Richtung Y erstreckt und an welchem ein Greifer 9 mit einer Greiferbasis 10 in der zweiten Richtung Y verfahren werden kann. Der Querbalken 23 ist jeweils an seinen äußeren Enden an Hochbalken 24 in Vertikalrichtung Z verschieblich gelagert und kann in Vertikalrichtung Z geregelt verfahren werden. Eine Alternative zur Ausführungsform gemäß Fig. 3 wäre eine in Vertikalrichtung Z bewegliche Greiferbasis in Kombination mit einem Querbalken auf einem fest vorgebbaren Höhenniveau.

Die 2D-Portalroboter 21, 22 ermöglichen, dass Produkte vom Förderband 20 ergriffen und auf der Produktablage 3 abgelegt werden können. Dafür müssen die Produkte 4 zunächst in den Verlagerungsebenen E1, E2 der jeweiligen Portalroboter 21, 22 angeordnet werden, die jeweils durch die zweite Richtung Y und die Vertikalrichtung Z aufgespannt werden. Dafür können die Produkte bereits auf vordefinierten, bekannten Positionen auf dem Förderband 20 abgelegt werden, sodass eine gesteuerte Ausrichtung der Produkte durch Verfahren des Förderbands 20 erfolgen kann. Alternativ, wird ein Rückführsignal bezüglich der Position der einzelnen Produkte 4 durch einen Sensor, beispielsweise durch eine Kamera 13, erfasst und ausgewertet, sodass die Position des Produkts 4 auf dem Förderband 20 bestimmt werden kann. Insbesondere kann die Ausrichtung für jedes Produkt 4 einzelnen erfolgen.

In Fig. 3 ist dargestellt, dass ein erstes Produkt 4.1 bereits auf die Produktablage 3 verlagert wurde, und zwar mittels des Greifers 9 des ersten Portalroboters 21. Während dieses Verlagerungsvorgangs wurde das Förderband 20 so bewegt, dass das Produkt 4.2 in Längsrichtung mit der Verlagerungsebene E2 des zweiten Portalroboters 22 ausgerichtet ist, und somit durch den Greifer 9 ergriffen werden kann und auf der Produktablage 3 abgelegt werden kann. Nach dem Ergreifen des Produkts 4.2 und während die Verlagerung des Produkts 4.2, wird das Förderband 20 so bewegt, dass das dritte Produkt 4.3 mit der Verlagerungsebene E1 des ersten Portalroboters 21 ausgerichtet wird. Dann kann das dritte Produkt 4.3 durch den Greifer 9 des ersten Portalroboter 21 ergriffen und verlagert werden. Während dieses Verlagerungsvorgangs wird entsprechend das Produkt 4.4 in der ersten Richtung X mit der Verlagerungsebene E2 ausgerichtet und dann durch den zweiten Portalroboter 22 ergriffen und verlagert.

Somit kann durch geregelte Ansteuerung des Förderbands 20 eine Ausrichtung in der ersten Richtung X bezüglich der Verlagerungsebenen E1, E2 für alle Produkte erreicht werden. Selbstverständlich können zusätzlich zu den Portalrobotern 21, 22 weitere 2D-Portalroboter parallel und in ersten Richtung X beabstandet angeordnet werden, um weitere, parallele Verlagerungsebenen bereitzustellen.

Die Produkte 4 können in mehreren Spuren parallel auf dem Förderband 20 angeordnet werden, insbesondere in zwei, drei, vier, fünf, sechs, sieben, acht oder mehr Spuren. Dabei ist die Spuranzahl vorzugsweise vom geforderten Format in der Verpackungsmaschine abhängig, beispielsweise von der Zahl der Verpackungsmulden in einer Zeile.

In Fig. 4 ist eine Vorderansicht der Vorrichtung aus Fig. 3 dargestellt. Bei der Produktablage 3 handelt es sich insbesondere um eine Tiefziehverpackungsmaschine in der durch einzelne Verpackungsunterschalen mehrere Verpackungsmulden 14 bereitgestellt werden. Insbesondere kann die Produktablage 3 verfahrbar angeordnet sein, sodass die befüllten Verpackungsmulden 14 aus dem Ablagebereich der Produktverlagerungseinrichtung 2 herausgefahren werden können.

Der Eingangsförderer 1 ist in diesem Ausführungsbeispiel als ein Endlosband ausgeführt. Es ist allerdings auch möglich, dass der Eingangsförderer mehrere parallele Endlosbänder umfasst, die pro Spur unabhängig angetrieben werden können, sodass die parallel angeordneten Produkte unabhängig bezüglich der Produktverlagerungseinrichtung ausgerichtet werden können. In manchen Ausführungsformen können die parallelen Produkte aber schon stromaufwärts der Produktverlagerungseinrichtung aufeinander ausgerichtet werden. Dafür kann eine Abfolge von geteilten Förderbändern mit Bandübergängen, die ein Stoppen oder separates Fördern von einzelnen Produkten ermöglichen, vorgesehen sein. Somit kann sicherstellt werden, dass die jeweiligen in der zweiten Richtung Y parallel angeordneten Produkte in der ersten Richtung X miteinander ausgerichtet sind. Weiterhin ist es möglich, dass ein Stopper im Bereich der Verlagerungsebene der Produktverlagerungseinrichtung vorgesehen ist, der ein ausgerichtetes Anhalten des Produktes in der Verlagerungsebene ermöglicht. Das Produkt kann insbesondere an einen Anschlag in der ersten Richtung X auflaufen, der knapp über der Bandebene des Förderbandes 20 vorgesehen ist. Insbesondere ist es möglich, dass bei mehreren Einzelriemen oder Rundriemen ein Ausheben des Produkts aus der Bandebene zu dem Zeitpunkt erfolgt, wo das Produkt die Verlagerungsebene erreicht.

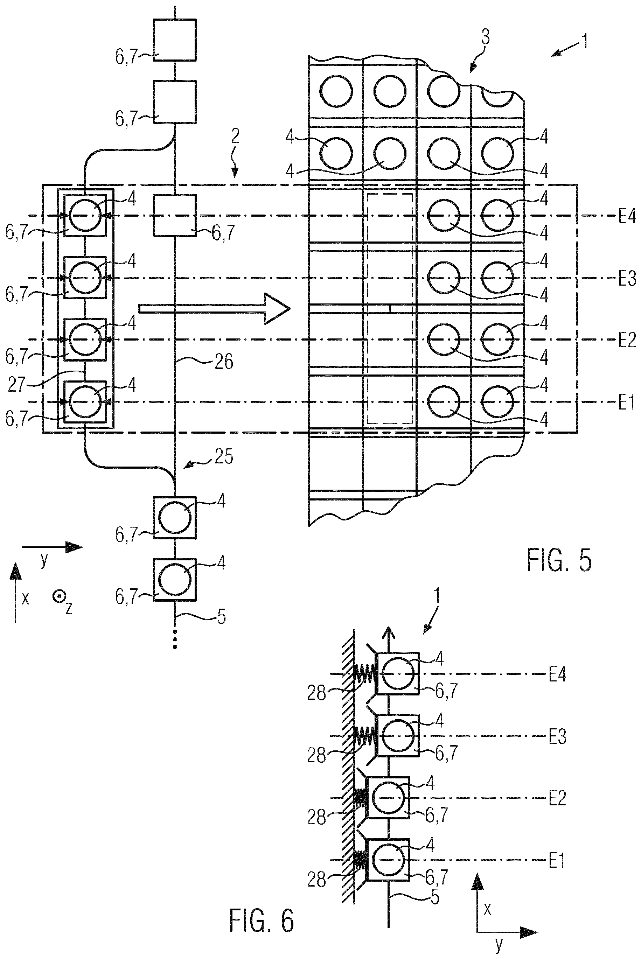

In Fig. 5 wird eine dritte Ausführungsform der Erfindung in Draufsicht gezeigt. Auch hier ist wieder ein Eingangsförderer 1 in Form eines Magnetfördersystems vorgesehen, der aber diesmal im Bereich der Produktverlagerungseinrichtung zwei parallele Spuren 26, 27 aufweist. Die parallelen Spuren 26, 27 umfassen insbesondere eine erste Spur 26 und eine zweite Spur 27, auf die einzelne Transportmover 6 mittels einer Weiche 25 verteilt werden können. In anderen Ausführungsformen können bei einer entsprechenden Mehrspur-Übergabe auch mehr als zwei benachbarte, parallele Spuren vorgesehen werden.

Die Transportmover 6 befüllen die jeweiligen Spuren 26, 27 jeweils abwechselnd. Im vorliegenden Ausführungsbeispiel werden jeweils vier Transportmover 6 mit Lebensmittelprodukten 4 auf die parallelen Spuren 26, 27 gefahren, und dann dort jeweils einzeln mit jeweiligen Verlagerungsebenen E1, E2, E3 und E4 ausgerichtet.

In der Ausführungsform gemäß Fig. 5 weist jeder Transportmover 6 nur einen Produktträger 7 mit einem Produkt 4 auf. Nach dem Ausrichten der Produkte 4 mit den Verlagerungsebenen E1 bis E4, werden die Produkte 4 von der Produktverlagerungseinrichtung 2 ergriffen und jeweils in einer vordefinierten Position auf der Produktablage 3 abgelegt. Insbesondere werden die Produkte 4 in Verpackungsmulden oder auf einem Formatsatz-Förderband einer Verpackungsmaschine abgelegt. Die Produkte werden dann im Formatsatz weiter in der ersten Richtung X gefördert und versiegelt bzw. anderweitig verpackt.

Während die Produkte 4 von der zweiten Spur 27 ergriffen und verlagert werden, werden leere Transportmover 6 von der ersten Spur 26 entfernt und neue Transportmover 6 mit Produkten 4 auf die erste Spur 26 gefahren. Somit kann durch wechselseitiges Einfahren und Ausfahren, sowie Ausrichten der Transportmover 6 eine Leistungserhöhung und ein Zeitgewinn erreicht werden.

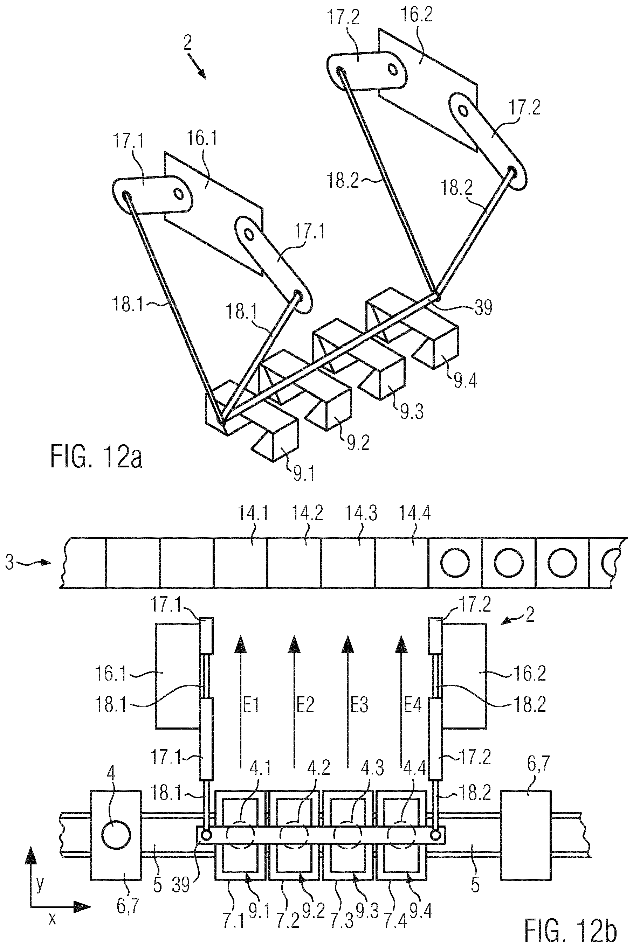

Die Produkte 4 in den Verlagerungsebenen E1 bis E4 können entweder gemeinsam und synchron verlagert werden, oder durch einzeln gesteuerte 2D-Roboter für die einzelnen Verlagerungsebenen. Bei einer gemeinsamen Verlagerung kann insbesondere ein Greifer-Querbalken vorgesehen sein, der sich in der ersten Richtung X erstreckt und an dem mehrere Greifer befestigt sind. Der Greifer-Querbalken kann beispielsweise durch zwei an seinen gegenüberliegenden Enden vorgesehene 2D-Picker (siehe Fig. 12) oder 2D-Portalroboter bewegt werden. Alternativ kann auch jeweils ein separat ansteuerbarer 2D-Picker oder 2D-Portalroboter pro Verlagerungsebene E1 bis E4 vorgesehen sein.

Fig. 6 zeigt eine Draufsicht auf eine Ausgestaltung eines Eingangsförderers 1, die eine verbesserte Ausrichtung der Produkte 4 in der zweiten Richtung Y ermöglicht. Die Ausrichtung in der ersten Richtung X erfolgt durch den Antrieb der Transportmover 6 im Magnetfördersystem, d.h. der Anhaltepunkt in der ersten Richtung X liegt in der Verlagerungsebene E1, E2, E3, E4, in welcher sich der zugeordnete Greifer bewegt.

Zusätzlich zu der Ausrichtung in der ersten Richtung X ist es insbesondere bei gekoppelten, d.h. synchron bewegten Greifern in mehreren Verlagerungsebenen vorteilhaft, wenn die Produkte 4 auf den einzelnen Transportmovern 6 auch in der zweiten Richtung Y, die insbesondere der Verlagerungsrichtung entspricht, ausgerichtet werden.

Dies kann insbesondere dadurch erreicht werden, dass die Produktträger 7 der Transportmover 6 gegenüber der Basis 8 der Transportmover 6 verschieblich sind. Die Verschiebung erfolgt insbesondere nach dem Stoppen und vor dem Ergreifen des Produkts 4. Die Auslenkung der Verschiebung in der zweiten Richtung Y entspricht der jeweiligen Lage des Produkts 4 auf dem Produktträger 7, dem Ablagefehler des Produkts 4 auf dem Produktträger 7 und/oder der Abweichung von der vorgesehenen Greifposition. Wie in Fig. 6 gesehen werden kann, wird der in der zweiten Richtung Y verschiebliche Produktträger 7 in der ersten Richtung X neben einem stationären federelastischen Gegenhalter 28 angeordnet. Die Verschiebung des Produktträgers 7 in der zweiten Richtung Y kann beispielsweise durch Aufbringen einer externen Kraft erfolgen.

Alternativ kann eine Federelastizität zwischen dem Produktträger 7 und der Basis 8 des Transportmovers 6 vorgesehen sein. Anstelle einer externen Kraft kann die Kraft für die relative Verschiebung des Produktträgers 7 gegenüber der Basis 8 des Transportmovers 6 auch durch ein Stellglied im Transportmover 6 bereitgestellt werden.

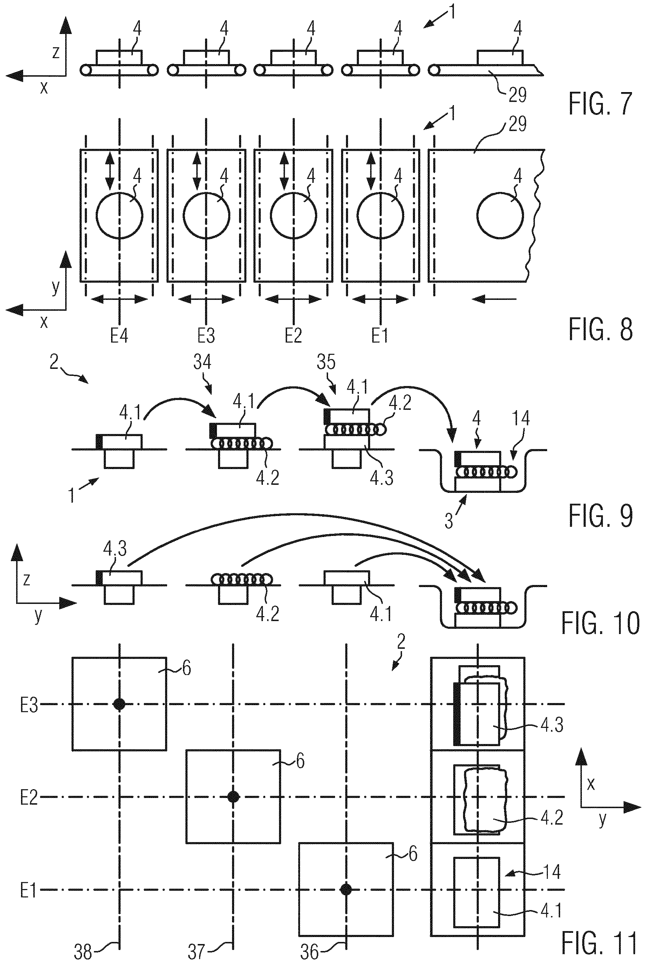

Fig. 7 zeigt eine Seitenansicht und Fig. 8 zeigt eine Draufsicht einer alternativen Ausgestaltung des Eingangsförderers 1, die eine Ausrichtung der Produkte 4 nicht nur in der ersten Richtung X, sondern auch in der zweiten Richtung Y ermöglicht. Anschließend an einen Zuführförderer 29, insbesondere in Form eines Bandförderers, schließen sich pro Verlagerungsebene E1 bis E4 einzelne Fördermodule 30, 31, 32, 33 an, die durch gewöhnliche Bandbewegung die Produkte 4 jeweils in der ersten Richtung X fördern und ausrichten können. Zusätzlich ist allerdings vorgesehen, dass die Fördermodule 30, 31, 32, 33 in der zweiten Richtung Y verfahren werden können, sodass jedes Produkt 4 auch in der zweiten Richtung Y ausgerichtet werden kann. Somit kann eine Ausrichtung der Produkte 4 in allen Verlagerungsebenen E1 bis E4 in der ersten und zweiten Richtung X, Y erfolgen, und ein Ergreifen des Produkts mit der Produktverlagerungseinrichtung 2 kann einfach erfolgen. Bei den Fördermodulen 30, 31, 32, 33 handelt es sich insbesondere um Bandförderer.

In einer nicht dargestellten Ausführungsform kann die Ausrichtung in der ersten Richtung X und in der zweiten Richtung Y bei einspuriger Zuführung für jedes Produkt auch nur einmalig an einer Stelle ausgeführt werden. Danach können die Produkte in einem für die Verlagerungseinrichtung angepassten Formatsatz auf einem durchgängigen Eingangsförderband bis zur Produktverlagerungseinrichtung transportiert werden. Wird dort nun ein Produkt des Formatsatzes durch Bewegung des Eingangsförderbandes in der ersten Richtung X mit einer Verlagerungsebene ausgerichtet, sind automatisch auch die anderen Produkte des gesamten Formatsatzes mit ihren jeweiligen Verlagerungsebenen ausgerichtet und in den vorgesehenen Positionen in der zweiten Richtung Y angeordnet. Dadurch können weitere Antriebe eingespart werden und die Komplexität des Systems kann reduziert werden. Insbesondere kann lediglich ein Bandmodul vorgesehen sein, dass in der zweiten Richtung Y gegenüber einem Zuführförderer und dem Eingangsförderband des Eingangsförderers 1 verschiebbar ist, sodass die Ausrichtung in der zweiten Richtung Y für jedes Produkt sequenziell auf dem Bandmodul erfolgen kann.

In Fig. 9 ist einer Ausgestaltung der Verlagerungseinrichtung 2 in Seitenansicht dargestellt, die es ermöglicht, Kombinationsprodukte zu erzeugen. Dafür wird ein Produkt 4.1 von einem Eingangsförderer 1 durch eine Verlagerungseinrichtung 2 ergriffen und auf einer Zwischenproduktablage 34 zwischenabgelegt, auf der bereits ein zweites Produkt 4.2 vorliegt. Das erhaltene Kombinationsprodukt aus Produkten 4.1 und 4.2 wird wiederum durch die Verlagerungseinrichtung 2 in der zweiten Richtung Y verlagert und auf einem weiteren Produkt 4.3 auf der Zwischenproduktablage 35 angeordnet. Das komplettierte Kombinationsprodukt bildet das finale Produkt 4, das die Produkte 4.1, 4.2 und 4.3 umfasst. Die Verlagerungsvorrichtung 2 kann für die Verlagerung vom Eingangsförderer 1 über die Zwischenproduktablagen 34, 35 und auf die Produktablage 3 nur einen 2D-Roboter aufweisen, oder für jeden einzelnen oder mehrere Verlagerungsvorgänge jeweils einen 2D-Roboter.

Alternativ kann ein Kombinieren von Produkten durch Übereinanderlegen von Produkten auf dem Eingangsförderer 1 erfolgen, d.h. ein Produkt wird durch die Verlagerungseinrichtung angehoben, der Eingangsförderer 1 richtet ein nachfolgendes Produkt unter dem angehobenen Produkt aus, und das angehobene Produkt wird auf das Produkt auf dem Eingangsförderer 1 abgelegt. Dann kann das Kombinationsprodukt ergriffen und verlagert werden. Durch Wiederholung dieses Vorgangs können auch mehr als zwei Produkte zu einem Kombinationsprodukt kombiniert werden. Bei dem Einsatz von Transportmovern kann insbesondere der Produktträger bewegt werden, um jeweils den Ablagepunkt unter einem 2D-Roboter der Verlagerungseinrichtung einzustellen, sodass eine definierte Anordnung der verschiedenen aufeinander angeordneten Produkte im Rahmen des gewünschten Produktdesigns erreicht werden kann. Dabei kann die erste Richtung insbesondere durch die Bewegung des Transportmovers auf dem Bahnsystem des Magnetfördersystems erreicht werden, während die zweite Richtung Y durch den 2D-Roboter realisiert wird. Dabei muss aber der mögliche Greifbereich des Robotergreifer über dessen Breite berücksichtigt werden. Vorteilhafterweise können wenigstens zwei 2D-Roboter eingesetzt werden, die in der gleichen Verlagerungsebene, aber in der ersten Richtung Y zueinander versetzt angeordnet sind. Der wenigstens eine stromaufwärtige 2D-Roboter kann Teilprodukte zwischen den Transportmovern kombinieren, während ein stromabwärtiger 2D-Roboter das Gesamtprodukt erfasst und auf der Produktablage 3 ablegt.

Fig. 10 und 11 zeigen eine Ausführungsform einer erfindungsgemäßen Vorrichtung zur Handhabung von Produkten in Vorderansicht und Draufsicht, in der drei parallele Zuführungsspuren 36, 37, 38 eines Magnetförderersystems vorgesehen sind, auf denen jeweils Transportmover 6 in der ersten Richtung X verfahrbar angeordnet sind. Jeder der Transportmover 6 hält in einer der Verlagerungsebenen E1, E2, E3 an und richtet das auf dem Transportmover 6 vorliegende Produkt bezüglich der Verlagerungsebene E1, E2, E3 aus. Dann wird das erste Produkt 4.1 in eine Verpackungsmulde 14 verlagert. Daraufhin wird die Verpackungsmulde 14 in der ersten Richtung X in die Ebene E2 verschoben und die Verlagerungseinrichtung ordnet das zweite Produkt 4.2 auf dem ersten Produkt 4.1 an. Schließlich wird die Verpackungsmulde 14 in die Verlagerungsebene E3 verschoben und die Verlagerungseinrichtung 2 ordnet das Produkt 4.3 auf dem Produkt 4.2 an, sodass ein Kombinationsprodukt mit Produkten 4.1, 4.2 und 4.3 entsteht. D.h. insgesamt sind drei 2D-Roboter parallel nebeneinander in den Verlagerungsebenen E1, E2 und E3 angeordnet, die nacheinander von drei Zuführungsspuren 36, 37, 38 Produkte aufnehmen und diese in einer gemeinsamen Verpackungsmulde 14 ablegen. Dabei sind die Haltepunkte in der ersten Richtung X auf den Spuren 36, 37, 38 der Transportmover 6 jeweils individuell. Durch die Bewegung der Verpackungsmulden 14 entstehen vielfältige Kombinationsmöglichkeiten. Weiterhin können auch mehrere parallel in der zweiten Richtung Y angeordnete Verpackungsmulden vorgesehen sein, wodurch vielfältige Kombinationsmöglichkeiten entstehen.

In Fig. 12a wird eine Ausgestaltung einer Verlagerungseinrichtung 2 dargestellt, die es ermöglicht Produkte in mehreren parallelen Verlagerungsebenen mittels der Greifer 9.1, 9.2, 9.3 und 9.4 zu verlagern. Die Verlagerungseinrichtung 2 weist zwei parallel angeordnete 2D-Picker auf, die jeweils über eine Roboterbasis 16.1, 16.2 gelagert sind und obere Arme 17.1, 17.2 sowie damit verbundene untere Arme 18.1, 18.2 aufweisen. Anstelle der Greiferbasis ist ein Querbalken 39 vorgesehen, an dem mehrere Greifer 9.1, 9.2, 9.3 und 9.4 befestigt sind. Die 2D-Picker werden jeweils synchron angesteuert, damit die Orientierung des Querbalkens 39 bei der Verlagerung nicht verändert wird. Somit können vier Produkte gleichzeitig ergriffen und in vier parallelen Verlagerungsebenen verlagert werden.

In Fig. 12b wird die Verlagerungseinrichtung gemäß Fig. 12a in einer Ausführungsform der erfindungsgemäßen Vorrichtung in Draufsicht dargestellt. Die Verlagerungsvorrichtung 2 mit den zwei parallel angeordnete 2D-Pickern ist zwischen einem Eingangsförderer 1, der Teil eines Magnetfördersystems mit Transportmovern 6 ist, und einer Produktablage 3, die Verpackungsmulden 14.1, 14.2, 14.3, 14.4 im Formatsatz aufweist, angeordnet.

Die an dem Querbalken 39 angeordneten Greifer 9.1, 9.2, 9.3, 9.4 sind ausgelegt, Lebensmittelprodukte 4.1, 4.2, 4.3, 4.4 zeitgleich von Produktträgern 7.1, 7.2, 7.3, 7.4 innerhalb der jeweiligen Verlagerungsebenen E1, E2, E3, E4 in die Verpackungsmulden 14.1, 14.2, 14.3, 14.4 zu verlagern. Die Verpackungsmulden 14.1, 14.2, 14.3, 14.4 werden dann in der ersten Richtung X oder entgegen der ersten Richtung X verfahren, sodass die befüllten Verpackungsmulden14.1, 14.2, 14.3, 14.4 weiterverarbeitet werden können und neue, unbefüllte Verpackungsmulden im Bereich der Verlagerungsebenen E1, E2, E3, E4 angeordnet werden.

Alternativ zu der Ausgestaltung aus Fig. 12a und 12b mit 2D-Pickern ist eine entsprechende Ausgestaltung einer Verlagerungseinrichtung 2 mit zwei 2D-Portalrobotern mit einem Querbalken mit mehreren Greifern möglich.

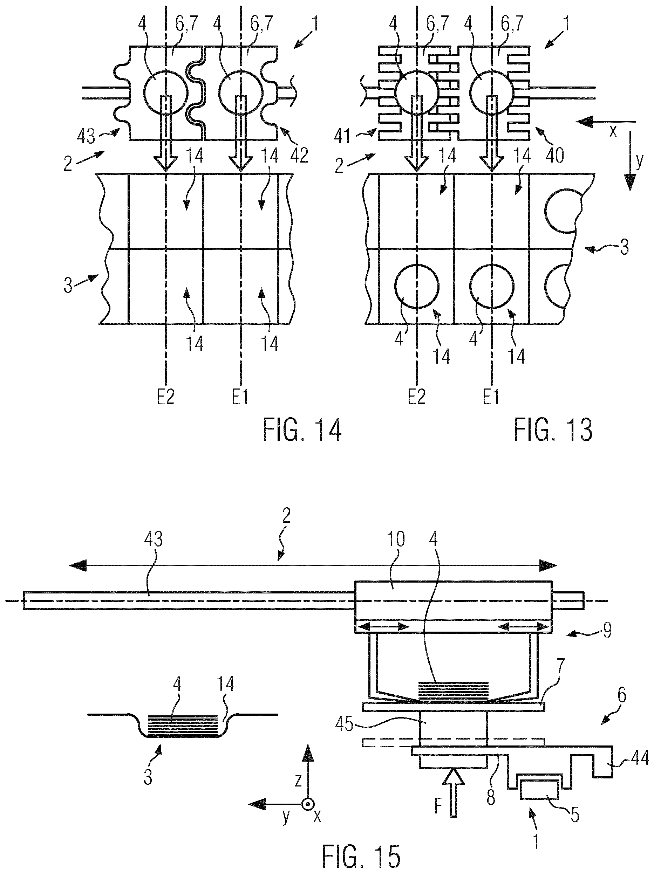

Oft sind die gewünschten Abstände auf der Produktablage 3, insbesondere die Abstände zwischen Verpackungsmulden 14, relativ gering, und manchmal sogar nur geringfügig größer als die aufzunehmenden Produkte. Dagegen haben die Produktträger von Transportmovern oft eine Einheitsgröße und besonders bei kleinen Produkten ergibt sich rundum ein freier Rand bzw. ein Abstand zum benachbarten Produkt. Je kleiner das transportierte Produkt ist, umso größer ist das Missverhältnis zwischen Produktgröße und Abmessungen der zugeordneten Verpackungsmulden. Deswegen wird in Fig. 13 und 14 eine Ausführungsform bereitgestellt, die eine nähere Anordnung von Produkten zueinander gewährleisten kann.

Fig. 13 und 14 zeigen erfindungsgemäße Vorrichtungen in Draufsicht, mit einer vorteilhaften Gestaltung der Produktträger 7.

Die Produktträger 7 sind wiederum auf Transportmovern 6 vorgesehen, die auf dem Bahnsystem 5 individuell steuerbar verfahren werden. Um den Abstand zwischen den einzelnen Produkten 4 in der ersten Richtung X reduzieren zu können, sind die Produktträger 7 mit zueinander komplementären Randkonturen 40, 41, 42, 43 versehen, sodass die Produktträger 7 bereichsweise ineinander eingreifen können, wenn sie in der ersten Richtung X aneinander gefahren werden. Damit ist es möglich, in der ersten Richtung X relativ eng aneinander angeordnete Verpackungsmulden 14 zeitgleich zu befüllen. Dies ist insbesondere bei der Handhabung von kleinen Produkten vorteilhaft, wenn die zugeordneten Formatsätzen der Verpackungsmulden 14 in der Produktablage 3 kleiner Abstände als die Länge der Produktträger 7 in der ersten Richtung X aufweisen.

Die zueinander passenden Randkonturen 40, 41 bzw. 42, 43 sind an den in Bewegungsrichtung zeigenden Seiten der Produktträger 7 vorgesehen, wobei jeweilige Konturen der stromaufwärtigen Seite mit jeweiligen Konturen der stromabwärtigen Seite komplementär sind. Somit sind an jedem Produktträger 7 zwei unterschiedliche Randkonturen vorgesehen, insgesamt können aber alle Produktträger einheitlich gestaltet werden.

Werden mit den gleichen Produktträgern große Produkte transportiert bzw. verfahren, so ist das Ineinanderfahren der Produktträger nicht notwendig, weil entsprechend große Verpackungsmulden mit entsprechenden Abständen im Formatsatz verwendet werden.

Gemäß Fig. 13 sind als Randkonturen 40, 41 Verzahnungen vorgesehen, mit wenigstens fünf Zähnen, die insbesondere jeweils rechteckig ausgeführt sind. Alternativ können auch dreieckige, spitz zulaufende Zähne vorgesehen werden. Diese Ausgestaltung ermöglicht, Lücken im Bereich der Randkonturen zu vermeiden, in die das aufgelegte Produkt einsinken kann. Somit eignet sich diese Ausgestaltung insbesondere für weiche Produkte. Die Anzahl der Zähne kann variiert werden, bevorzugt werden aber wenigstens vier Zähne.

Gemäß Fig. 14, sind die Randkonturen 42, 43 als halbkreisförmige, halbellipsenförmige oder bogenförmige Vorsprünge und Ausschnitte ausgebildet. Dies ermöglicht eine einfachere Reinigbarkeit der Zwischenräume, da die Randkonturen einfacher zugänglich sind.

In einer Ausführungsform können Produktablagen, die gemeinsam und zueinander verfahrbar auf der Basis eines Transportmovers angeordnet sind, entsprechende Randkonturen aufweisen, sodass die darauf aufliegenden Produkte näher zueinander gefahren werden können.

In Fig. 15 ist eine weitere Ausführungsform der Erfindung in schematischer Seitenansicht dargestellt. Der Eingangsförderer 1 wird wiederum durch ein Magnetfördersystem gebildet, mit einem Bahnsystem 5, das sich zumindest im Bereich der Verlagerungseinrichtung 2 in die erste Richtung X erstreckt. Auf dem Bahnsystem 5 laufen individuell antreibbare Transportmover 6, mit jeweils einem Produktträger 7. Der Produktträger 7 ist asymmetrisch bezüglich der Basis 8 des Transportmovers 6 bzw. bezüglich des Bahnsystems 5 angeordnet. Insbesondere ist der Produktträger 7 in der zweiten Richtung Y außermittig angeordnet. Um zu gewährleisten, dass der Transportmover 6 dennoch sicher und stabil auf dem Bahnsystem 5 angeordnet ist, weist die Basis 8 ein Gegengewicht 44 auf, das auf der anderen Seite des Bahnsystems 5 angeordnet ist als der Produktträger 7.

Der Produktträger 7 ist bezüglich der Basis 8 in der Vertikalrichtung Z verschieblich gelagert. Insbesondere weist die Basis 8 eine Aussparung auf, in der ein Fuß 45 des Produktträgers 7 angeordnet ist. Der Fuß 45 des Produktträgers 7 entspricht in seinen Dimensionen ungefähr der Aussparung in der Basis 8. Wenn nun eine Kraft F auf den Fuß 45 des Produktträgers 7 aufgebracht wird, so wird der Produktträger 7 von der in Fig. 15 gezeigten gestrichelten Position in die dargestellte Position gehoben. Die Kraft F kann insbesondere dadurch aufgebracht werden, dass der Fuß 45 des Produktträgers 7 auf eine stationär vorgesehene Rampe aufläuft und somit während der Bewegung des Transportmovers 6 in die erste Richtung X automatisch in Vertikalrichtung Z nach oben gedrückt wird.

In anderen Ausführungsformen ist es möglich, dass anstelle des Gegengewichts 44 oder zusätzlich zum Gegengewicht 44 noch zusätzliche Produktträger 7, die ebenfalls in Vertikalrichtung Z verschieblich angeordnet sein können, an einem Transportmover 6 vorgesehen sind. Dies ermöglicht insbesondere, dass durch geeignet angeordnete Rampen die verschiedenen Produktträger 7 nacheinander angehoben werden können, sodass die darauf angeordneten Produkte 4 jeweils nacheinander von wenigstens einem Greifer ergriffen werden können. Dabei kann vermieden werden, dass der Greifer in Kontakt mit anderen Produkten 4 auf den Transportmover 6 kommt, da lediglich das zu ergreifende Produkt 4 angehoben wird.

In der vorliegenden Ausführungsform ermöglicht die Anhebbarkeit des Produktträgers 7 in Vertikalrichtung Z, dass ein weiterer Freiheitsgrad in der Beweglichkeit des Produktverlagerungssystems eingespart werden kann. So ist in dieser Ausführungsform ein Greifer 9 vorgesehen, dessen Greiferbasis 10 bezüglich einer sich in der zweiten Richtung Y erstreckenden Schiene 46 verschieblich ist.

Wiederum erfolgt eine Ausrichtung der Produkte 4 in der ersten Richtung X durch den Eingangsförderer 1 und eine Ausrichtung der Produkte 4 in der zweiten Richtung Y durch die Produktverlagerungseinrichtung 2, sodass das Produkt 4 mit geringem technischen Aufwand in einer definierten Position auf einer Produktablage 3 abgelegt werden kann. Dies ermöglicht eine betriebssichere und einfach zu reinigende Vorrichtung.

Beim Ablegen der Produkte 4 wird der Greifer 9, wenn er sich in geringer Höhe über der Produktablage 3 befindet, geöffnet, und das Produkt 4 fällt aus dem Greifer auf die Produktablage 3. In anderen, entsprechenden Ausführungsformen kann es auch möglich sein, dass die Produktablage wenigstens bereichsweise angehoben wird, wenn der Greifer 9 in Ablageposition ist, sodass das Produkt 4 direkt auf der Produktablage 3 abgelegt werden kann oder zumindest die Fallhöhe reduziert wird.

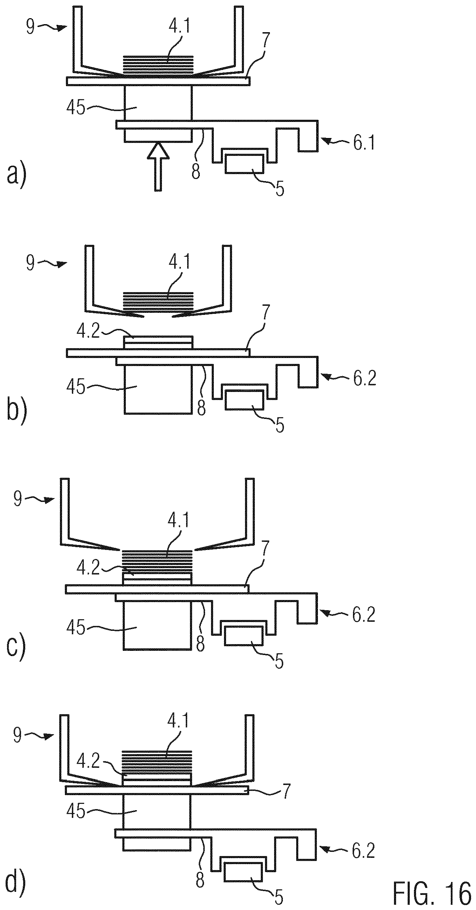

In den Fig. 16 a) bis d) wird gezeigt, wie mit der Vorrichtung gemäß Fig. 15 Kombinationsprodukte erzeugt werden. Wie in Fig. 16 a) gezeigt wird, wird mittels eines Transportmovers 6 zunächst ein Produkt mit einem Greifer 9 einer weiterhin nicht dargestellten Verlagerungseinrichtung ausgerichtet. Dabei wird die Produktablage 7 angehoben, sodass das Produkt 4.1 vom Greifer 9 ergriffen werden kann. Der leere Transportmover 6.1 wird dann weiter gefahren. Dann wird ein weiterer Transportmover 6.2 auf dem Bahnsystem 5 herangefahren, wobei sich auf der Produktablage 7 des Transportmovers 6.2 ein zweites Produkt 4.2 befindet. Das Produkt 4.2 wird mit dem Greifer 9 bzw. dem darin bereits ergriffenen Produkt 4.1 ausgerichtet. Dann wird der Greifer 9 geöffnet, sodass das Produkt 4.1 auf dem Produkt 4.2 abgelegt wird. Daraufhin wird, wie in Fig. 16 d) dargestellt, der Produktträger 7 des Transportmovers 6.2 angehoben, sodass beide Produkte 4.1 und 4.2 von dem Greifer 9 ergriffen werden können. Folglich liegt in dem Greifer 9 nach dem nicht mehr dargestellten Ergreifen ein Kombinationsprodukt mit Produkten 4.1 und 4.2 vor. Die vorgenannten Schritte können wiederholt werden, um Kombinationsprodukte mit drei, vier, fünf oder mehr Produkten zu erhalten.

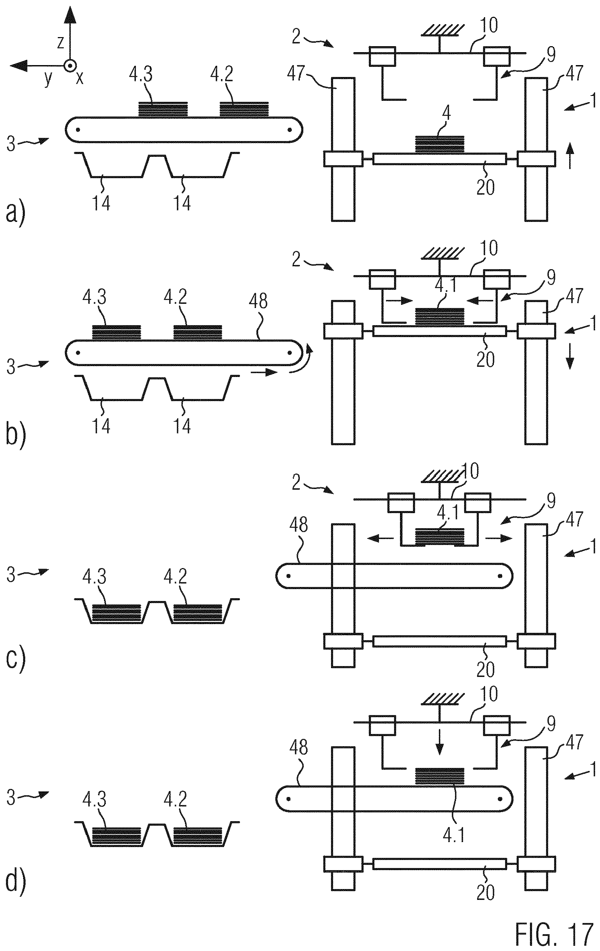

In Fig. 17 a) bis d) wird eine weitere alternative Ausgestaltung einer erfindungsgemäßen Vorrichtung dargestellt.

Wie bereits in Fig. 15 und 16 dargestellt, ist ein Eingangsförderer 1 vorgesehen, der zumindest bereichsweise in Vertikalrichtung Z angehoben werden kann. Im vorliegenden Ausführungsbeispiel ist der Eingangsförderer 1 ein Förderband 20, bei dem wenigstens eine Umlenkrolle an einer vertikalen Schiene 47 verfahren werden kann. Vorteilhafterweise können zwei in der ersten Richtung X voneinander beabstandete Umlenkrollen zeitgleich in Vertikalrichtung Z angehoben werden, sodass ein horizontaler Auflagebereich des Förderbands 20 angehoben wird. Alternativ zu dem bereichsweisen Anheben des Förderbands 20 kann auch ein vollständiges Anheben des Förderbands 20 vorgesehen werden. Beispielsweise kann ein Teilstück des Eingangsförderers, das durch ein separates Förderband gebildet wird, angehoben werden. Weiterhin alternativ kann auch im Ausführungsbeispiel gemäß Fig. 17 anstelle des Förderbands ein Transportmover mit anhebbarem Produktträger vorgesehen sein. Weiterhin alternativ kann ein Transportmover vorgesehen sein, der im Bereich des Greifers insgesamt auf eine Rampe im Bahnsystem 5 auffährt.

Im Ausführungsbeispiel aus Fig. 17 a) bis d) ist die Basis 10 des Greifers 9 stationär, d.h. unbeweglich, angeordnet, sodass sich der Greifer 9 lediglich öffnen und schließen kann. Wenn das Produkt 4 durch den Eingangsförderer 1 angehoben wurde, wie in Fig. 17 b) gezeigt, dann schließt der Greifer 9, sodass das Produkt im Greifer 9 ergriffen wird, wie in Fig. 17 c) gezeigt. Dann wird der Eingangsförderer 1 entgegen der Vertikalrichtung Z nach unten gefahren. Wie in Fig. 17 c) gezeigt, wird dann ein Zwischenablageförderband 48 entgegen der zweiten Richtung Y unter den Greifer 9 gefahren. Dann wird der Greifer 9 geöffnet, sodass das Produkt 4 auf das Zwischenablageförderband 48 fällt, wie in Fig. 17 d) gezeigt. Insbesondere kann dieser Vorgang wiederholt werden, sodass nacheinander mehrere Produkte, insbesondere zwei, drei oder vier Produkte auf dem Zwischenablageförderband 48 angeordnet werden.

Das Zwischenablageförderband 48 wird dann in der zweiten Richtung Y verfahren, sodass es über einer Produktablage 3 angeordnet ist, wie in Fig. 17 a) gezeigt. Die auf dem Zwischenablageförderband 48 angeordneten Produkte 4.2, 4.3 können dann mit Verpackungsmulden 14 einer Produktablage 3 ausgerichtet werden, und zwar durch Verfahren des gesamten Zwischenablageförderbands 48 in der zweiten Richtung Y oder durch Antrieb des Umlaufs des Zwischenablageförderbands 48. Nachdem die Produkte 4.2, 4.3 über den Verpackungsmulden 14 angeordnet sind, wird das Zwischenablageförderband 48 entgegen der zweiten Richtung Y verfahren und zeitgleich läuft das Zwischenablageförderband 48 um, sodass die Produkte 4.2, 4.3 im Ergebnis stationär bleiben, während das Zwischenablageförderband 48 unter ihnen herausgezogen wird. Somit fallen die Produkte 4.2, 4.3 nacheinander in ihre jeweilig zugeordneten Verpackungsmulden 14. Die Verpackungsmulden 14 können dann insbesondere in der ersten Richtung X verfahren werden, sodass neue, freie Verpackungsmulden 14 vorliegen, in denen dann die nächsten Produkte abgelegt werden können.

Natürlich ist es auch möglich die Ausrichtung der Produkte mit den Verpackungsmulden 14 erst im Zeitpunkt des Ablegens der Produkte in den Verpackungsmulden 14 vorzunehmen, d.h. die Umlaufgeschwindigkeit des Zwischenablageförderbands 48 und die Verfahrgeschwindigkeit in der zweiten Richtung Y werden so aneinander angepasst, dass zum gegebenen Zeitpunkt das gegebene Produkt über der Verpackungsmulde 14 angeordnet ist und in diese fällt.

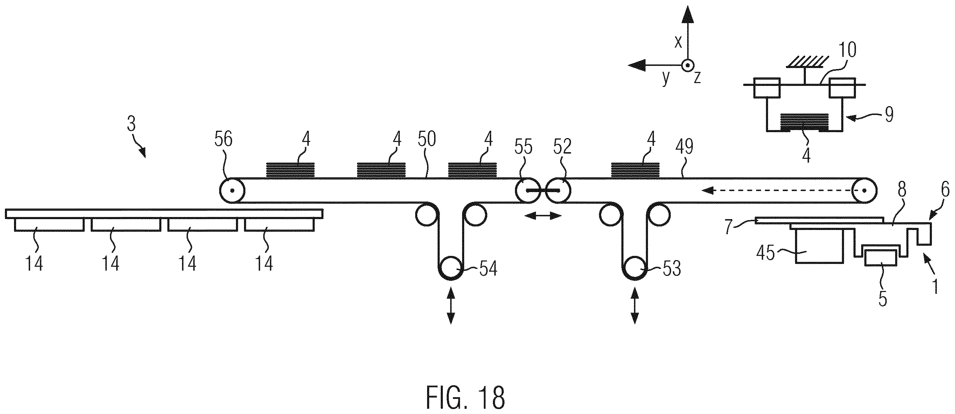

Fig. 18 zeigt eine weitere erfindungsgemäße Ausführungsform. Wiederum weist die Produktverlagerungseinrichtung 2 einen Greifer 9 auf, dessen Greiferbasis 10 stationär ist. Der Eingangsförderer 1 umfasst wiederum ein Magnetfördersystem mit einem Bahnsystem 5, auf dem einzeln steuerbare Transportmover 6 angeordnet sind, die jeweils wenigstens einen Produktträger 7 aufweisen. Der Produktträger 7 wird angehoben, sodass der stationäre Greifer 9 das Produkt 4 ergreifen kann. In der Ausführungsform in Fig. 18 sind zwei Zwischenablageförderer 49, 50 vorgesehen, die insbesondere als Zwischenablageförderbänder ausgestaltet sind.

Der erste Zwischenablageförderer 49 ist ausgelegt, um zumindest bereichsweise unter den Greifer 9 gefahren zu werden. Dafür kann entweder der gesamte Zwischenablageförderer 49 verfahren werden, oder nur das stromaufwärtige Ende 51 davon. Um eine Verfahrbarkeit des stromaufwärtigen Endes 51 unabhängig vom stromabwärtigen Ende 52 zu ermöglichen, ist eine Längenverstelleinrichtung 53 vorgesehen, mit der die Länge der Auflagefläche des Zwischenablageförderers 49 verändert werden kann. Insbesondere ist die Längenverstellvorrichtung 53 eine Umlaufrolle, die bezüglich der Transportebene des Zwischenablageförderers 49 verstellt werden kann, sodass dessen Förderband über eine einstellbare Distanz umgelenkt wird. Damit kann die Länge des Zwischenablageförderers 49 in der zweiten Richtung Y verändert werden.

Der zweite Zwischenablageförderer 50, der stromabwärts in der zweiten Richtung Y vom ersten Zwischenablageförderer 49 vorgesehen ist, kann ebenfalls eine Längenverstellvorrichtung 54 aufweisen, um die Länge des zweiten Zwischenablageförderer 50 zwischen seinem stromabwärtigen Ende 55 und stromabwärtigen Ende 56 zu verstellen. Zudem kann auch der zweite Zwischenablageförderer 50 in der zweiten Richtung Y verfahrbar sein. Insbesondere können das stromabwärtige Ende 52 des ersten Zwischenablageförderers 49 und das stromaufwärtige Ende 55 des zweiten Zwischenablageförderers 50 miteinander verbunden sein. Folglich wird immer der gleiche Abstand zwischen den Zwischenablageförderern 49, 50 gewahrt, und ein sicherer Übergang der Produkte 4 vom ersten Zwischenablageförderer 49 auf den zweiten Zwischenablageförderer 50 ermöglicht. Die Zwischenablageförderer 49, 50 können getrennt oder gemeinsam gesteuert werden, insbesondere bezüglich der Geschwindigkeit des Bandes in der zweiten Richtung Y. Durch die freie Verfahrbarkeit des stromabwärtigen Endes 56 in der zweiten Richtung Y kann gewährleistet werden, dass das Produkt 4 sich jeweils über den Verpackungsmulden 14 der Produktablage befindet, wenn es in der zweiten Richtung Y von dem zweiten Zwischenablageförderer 50 herunter gefördert wird. Somit kann ein Einlegen der einzelnen Produkte 4 in die Verpackungsmulden 14 an gezielten Positionen einer Produktablage 3 erfolgen.

In allen Ausführungsbeispielen können anstelle von Verpackungsmulden 14 auch andere Produktablagen 3 vorgesehen sein, beispielsweise eine Ablageplatte, ein Fördermittel oder Ähnliches. Die erfindungsgemäße Konstruktion gewährleistet immer, dass eine genaue Positionierung der Produkte in der ersten Richtung X und der zweiten Richtung Y mit geringem Aufwand erreicht werden kann.

## Patentansprüche

1. Vorrichtung zum Handhaben von Produkten (4), insbesondere Lebensmittelprodukten, umfassend
einen Eingangsförderer (1), der ausgelegt ist, Produkte (4) in einer ersten Richtung (X) zu fördern, und
eine Produktverlagerungseinrichtung (2), die Produkte (4) von dem Eingangsförderer (1) auf eine Produktablage (3) verlagert,
**dadurch gekennzeichnet, dass**
die Produktverlagerungseinrichtung (2) so ausgestaltet ist, dass damit die Produkte (4) jeweils ausschließlich in einer Verlagerungsebene (E, E1, E2, E3, E4) verlagerbar sind, die durch eine zweite Richtung (Y), die sich von der ersten Richtung (X) unterscheidet, und eine Vertikalrichtung (Z) aufgespannt wird.

2. Vorrichtung nach Anspruch 1, wobei der Eingangsförderer (1) ein Magnetfördersystem ist, das einzelne, individuell steuerbare Transportmover (6), die wenigstens einen Produktträger (7) und insbesondere wenigstens einen Permanentmagneten aufweisen, umfasst, wobei die Transportmover (6) auf einem Bahnsystem (5), das insbesondere Linearmotoren umfasst, bewegbar sind, und wobei sich der Bereich des Bahnsystems (5), ausgehend von dem die Produktverlagerungseinrichtung (2) die Produkte (4) verlagert, in der ersten Richtung (X) erstreckt, und wobei die Transportmover (6) eine Basis (8), die auf dem Bahnsystem (5) verfahrbar angeordnet ist, und den wenigstens einen Produktträger (7) aufweisen, der bezüglich der Basis (8) verfahrbar ist, so dass das wenigstens eine Produkt (4) auf dem Produktträger (7) durch Verfahren des Produktträgers (7) bezüglich der Basis (8) so angeordnet werden kann, dass es von der Produktverlagerungseinrichtung (2) erfasst und/oder verlagert werden kann.

3. Vorrichtung nach Anspruch 2, wobei die Transportmover (6) eine Basis (8) und wenigstens zwei Produktträger (7) aufweisen, die zueinander verfahrbar sind, sodass sie in einem gewünschten Abstand angeordnet werden können, damit durch die Produktverlagerungseinrichtung (2) die Produkte der wenigstens zwei Produktträger (7) gleichzeitig verlagerbar sind.

4. Vorrichtung nach einem der vorangehenden Ansprüche, wobei die Produktträger (7) zueinander passende Randkonturen (40, 41, 42, 43) aufweisen, die ausgelegt sind, ineinander einzugreifen, wenn die Produktträger (7) aneinander angrenzend angeordnet werden, um die Abstände zwischen den jeweiligen Produkten (4) zu verringern.

5. Vorrichtung nach einem der vorangehenden Ansprüche, wobei der Eingangsförderer (1) wenigstens bereichsweise in der Vertikalrichtung (Z) anhebbar ist, sodass die Relativbewegung in Vertikalrichtung (Z) zwischen einem Greifer (9) der Produktverlagerungseinrichtung (2) und dem Eingangsförderer (1) beim Ergreifen der Produkte (4) durch eine Bewegung des Eingangsförderers (1) realisiert werden kann.

6. Vorrichtung nach einem der vorangehenden Ansprüche, wobei der Eingangsförderer (1) im Bereich der Produktverlagerungseinrichtung (2) mehrere einzeln ansteuerbare Spuren (26, 27, 36, 37, 38) aufweist, von denen ausgehend die Produktverlagerungseinrichtung (2) die Produkte (4) bewegen kann.

7. Vorrichtung nach einem der vorangehenden Ansprüche, wobei die Produktverlagerungseinrichtung (2) einen 2D-Roboter, insbesondere einen 2D-Picker (11), umfasst.

8. Vorrichtung nach einem der Ansprüche 1 bis 6, wobei die Produktverlagerungseinrichtung einen 2D-Portalroboter (21, 22) umfasst.

9. Vorrichtung nach einem der vorangehenden Ansprüche, wobei mehrere 2D-Roboter in der ersten Richtung (X) aufeinanderfolgend und parallel vorgesehen sind.

10. Verfahren zum Handhaben von Produkten (4), insbesondere Lebensmittelprodukten, mit den Schritten:
Bewegen wenigstens eines Produktes (4) auf einem Eingangsförderer (1) in einer ersten Richtung (X),
Ausrichten des wenigstens einen Produktes (4) bezüglich einer Produktverlagerungseinrichtung (2) durch Bewegen in der ersten Richtung (X) auf dem Eingangsförderer (1),
Ergreifen des Produktes (4) und Verlagern des Produktes (4) in einer zweiten Richtung (Y), die sich von der ersten Richtung (X) unterscheidet, und
Ablegen des Produktes (4) auf einer Produktablage (3).

11. Verfahren nach Anspruch 10, wobei der Eingangsförderer (1) als Magnetfördersystem ausgestaltet ist, das einzelne Transportmover (6) umfasst, wobei auf zumindest einem Transportmover (6) wenigstens ein Produkt (4) angeordnet ist.

12. Verfahren nach Anspruch 11, wobei mehrere Transportmover (6) so auf dem Eingangsförderer (1) angeordnet werden, dass die relative Anordnung der Produkte (4) auf den mehreren Transportmovern (6) dem Formatsatz einer Produktverlagerungseinrichtung (2) entspricht, sodass die Produkte (4) gemeinsam verlagert werden können.

13. Verfahren nach Anspruch 11 oder 12, wobei im Magnetfördersystem parallele Spuren (26, 27, 36, 37, 38) vorgesehen sind, auf denen jeweils abwechselnd mehrere Transportmover (6) mit Produkten (4) angeordnet werden, wobei die Produkte (4) der einzelnen Spuren (26, 27, 36, 37, 38) jeweils abwechselnd gemeinsam von der Produktverlagerungseinrichtung (2) verlagert werden.

14. Verfahren nach einem der Ansprüche 10 bis 13, wobei eine oder mehrere Zwischenproduktablagen (34, 35) vorgesehen sind, auf denen die Produkte (4) zwischenabgelegt werden, wodurch mehrere Produkte (4) zu einem Kombinationsprodukt kombiniert werden können.

15. Verfahren nach einem der Ansprüche 10 bis 14, wobei das Produkt (4) nach dem Ergreifen von der Verlagerungseinrichtung (2) auf ein anderes Produkt (4) auf dem Eingangsförderer (1) abgelegt wird, sodass ein Produkt (4) in Form eines Kombinationsproduktes entsteht, das wiederum ergriffen und in der zweiten Richtung (Y), die sich von der ersten Richtung (X) unterscheidet, verlagert und auf der Produktablage (3) abgelegt wird.
